# EUROPEAN PATENT SPECIFICATION

(11) **EP 0 390 166 B1**
(45) Date of publication and mention of the grant of the patent: **04.08.1993**
(21) Application number: 90106064.0
(22) Date of filing: 29.03.1990
(51) Int. Cl.: G01B 21/20, G01B 7/34, G01B 7/28, G01B 11/24

(54) **Edge detector**
Kantendetektor
Détecteur de bords

(30) Priority: 29.03.1989 JP 74979/89; 26.04.1989 JP 104519/89; 26.04.1989 JP 104520/89
(43) Date of publication of application: 03.10.1990
(73) Proprietor: CANON KABUSHIKI KAISHA, Tokyo (JP)
(72) Inventor: Yamano, Akihiko, Yokohama-shi, Kanagawa-ken (JP); Nose, Hiroyasu, Zama-shi, Kanagawa-ken (JP); Kawase, Toshimitsu, Atsugi-shi, Kanagawa-ken (JP); Miyazaki, Toshihiko, Hiratsuka-shi, Kanagawa-ken (JP); Oguchi, Takahiro, Atsugi-shi, Kanagawa-ken (JP)
(74) Representative: Blumbach Weser Bergen Kramer

(56) References cited:
- EP-A- 0 219 127
- EP-A- 0 262 253
- EP-A- 0 290 648
- EP-A- 0 304 893
- FR-A- 2 504 256
- JOURNAL OF APPLIED PHYSICS, vol. 61, no. 10, 15th May 1987, pages 4723-4729; Y. MARTIN: "Atomic force microscope-force mapping and profiling on a sub 100-A scale"
- JOURNAL OF VACUUM SCIENCE & TECHNOLOGY: PART A, vol. 6, no. 2, March/April 1988, pages 279-282; P. GRÜTTER et al.: "Application of atomic force microscope to magnetic materials"
- APPLIED PHYSICS LETTERS, vol. 52, no. 26, 27th June 1988, pages 2233-2235; B.J. BRYANT et al.: "Scanning tunneling and atomic force microscopy combined"

## Description

### BACKGROUND OF THE INVENTION

This invention relates to a measuring apparatus according to the pre-characterizing part of claim 1, preferable for use on line width measuring apparatus for LSI patterns, encoder and others.

Prior art detectors typical to be intended for this kind of measurement include a device for detecting an edge through applying a laser beam spot to a tested pattern and detecting a scattered light from the pattern edge. An apparatus using an electron beam includes an electron beam device for detecting a tested pattern edge through applying a heat emission electron from a cathode or a field emission electron to a tested matter in concentration and detecting a secondary electron emitted from the tested matter.

However, in case of the prior art device using laser beams, a resolution cannot be minimized inasmuch as a beam spot size cannot be made small in excess further of a limit, and a satisfactory precision is not obtainable for detection of USI pattern edges of the semiconductor wafer fined down further in structure recently. Then, while attaining 10 nanometers of a resolution anyhow, the device using electron beams is also not yet satisfactory for detection of VLSI pattern edges, furthermore a vacuum system is required therefor, the device gets large unavoidably in size and a working efficiency deteriorates in addition.

In accordance with the pre-characterizing part of claim 1, EP-A-0 304 893 discloses a measuring apparatus in the form of an encoder wherein a periodic surface structure provided by a regular atomic arrangement on the surface of a material is used as a reference and wherein use is made of a tunnel current which flows between the reference and a probe. The signal obtained from the probe is used as a reference of length unit. In accordance with common measuring technique, a length of an object to be detected is replaced by a length of a part of a measuring device by attaching the measuring device on the object. Then, the replaced length of a part of the measuring device is compared with a reference scale.

According to the above document, pulses are formed from the tunnel current wave form and data processing is carried out on the basis of the pulses.

The primary object of the invention is to provide a measuring apparatus small in size, simple in construction and high in resolution and precision at the same time.

This object is achieved in accordance with the features of claim 1. According to the present invention, a relative moving distance of the probe moved by the moving means is measured between positions detected by the edge detecting means. Thereby, an unknown interval between the edge portions is detected. Specifically, due to the edge detection and the distance measurement of the relative moving distance of the probe with respect to the detected edges, the length of the object to be detected is replaced with the length of a part of the measuring device.

### BRIEF DESCRIPTION OF THE DRAWINGS

- Fig. 1A and Fig. 1B: are principle diagrams of a first embodiment of the invention;
- Fig. 2: is a block diagram of a line width measuring apparatus of the first embodiment of the invention;
- Fig. 3: is a waveform diagram showing signal examples of each part of the apparatus;
- Fig. 4: is a block diagram of an encoder given in a second embodiment of the invention;
- Fig. 5: is a detailed drawing of scale forms of the encoder;
- Fig. 6: is a block diagram of a line width measuring apparatus given in a third embodiment of the invention;
- Fig. 7: is a waveform diagram showing signal examples of each part of the apparatus;
- Fig. 8: is a block diagram of a line width measuring apparatus given in a fourth embodiment of the invention;
- Fig. 9: is a waveform diagram showing signal examples of each part of the apparatus;
- Fig. 10: is a block diagram of a line width measuring apparatus given in a fifth embodiment of the invention;
- Fig. 11: is a waveform diagram showing signal examples of each part of the apparatus;
- Fig. 12: is a block diagram of a line width measuring apparatus given in a sixth embodiment of the invention;
- Fig. 13: is a waveform diagram showing signal examples of each part of the apparatus;
- Fig. 14: is a block diagram of a line width measuring apparatus given in a seventh embodiment of the invention;
- Fig. 15: is a waveform diagram showing signal examples of each part of the apparatus;
- Fig. 16: is a block diagram of a line width measuring apparatus given in an eighth embodiment of the invention;
- Fig. 17: is a waveform diagram showing signal examples of each part of the apparatus;
- Fig. 18: is a block diagram of a line width measuring apparatus given in a ninth embodiment of the invention;
- Fig. 19: is a waveform diagram showing signal examples of each part of the apparatus;
- Fig. 20: is a block diagram of a line width measuring apparatus given in a tenth embodiment of the invention;
- Fig. 21: is a waveform diagram showing signal examples of each part of the apparatus;
- Fig. 22: is a block diagram of a line width measuring apparatus given in an eleventh embodiment of the invention;
- Fig. 23: is a waveform diagram showing signal examples of each part of the apparatus;
- Fig. 24: is a block diagram of a line width measuring apparatus given in a twelfth embodiment of the invention;
- Fig. 25: is a waveform diagram showing signal examples of each part of the apparatus;
- Fig. 26: is a block diagram of a line width measuring apparatus given in a thirteenth embodiment of the invention;
- Fig. 27: is a waveform diagram showing signal examples of each part of the apparatus;
- Fig. 28: is a block diagram of a line width measuring apparatus given in a fourteenth embodiment of the invention;
- Fig. 29: is a waveform diagram showing signal examples of each part of the apparatus.

### DETAILED DESCRIPTION OF THE PREFERRED EMBODIMENTS

By applying a voltage between a conductive probe and a conductive substance kept close as far as 1 nanometer or so, and detecting a tunnel current flowing therebetween, STM is a device capable of obtaining a surface form of the conductive substance and various data on an electron distributed state at 0.1 nanometers in transverse resolution and 0.01 nanometers in longitudinal resolution [G. Binning et al., Phys. Rev. Lett. 49 (1982) 57].

Accordingly, from applying a principle of STM, an edge of a tested pattern can be detected at 0.1 nanometers in transverse resolution by applying a voltage between the tested pattern and a probe kept close thereto and detecting a tunnel current flowing therebetween.

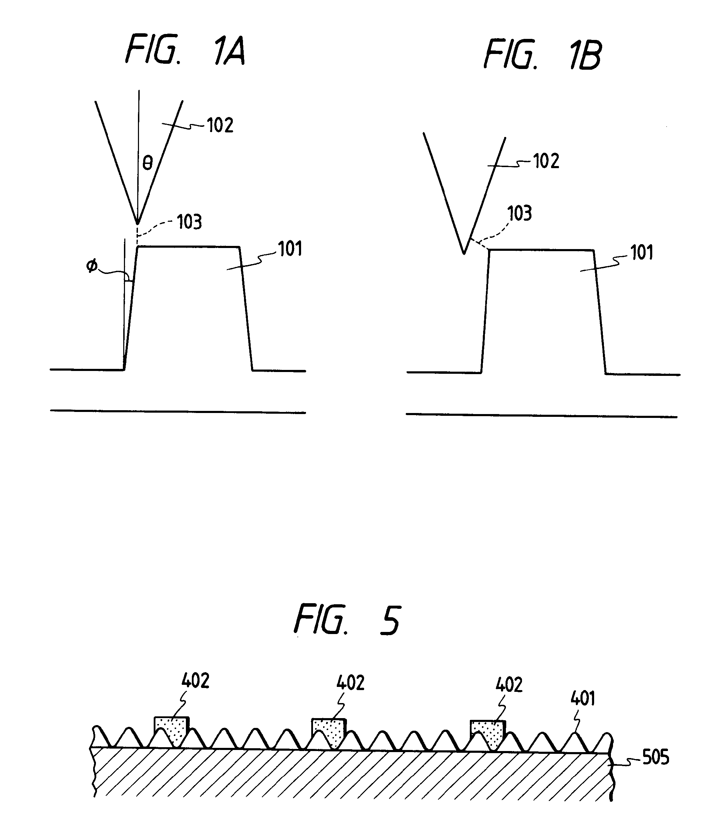

The edge detection in a first embodiment of the invention is realized on the following principle. A point whereat a tunnel current 103 flowing between a probe 102 and a tested matter 101 flows in STM shifts as shown in Fig. 1A and Fig. 1B according to a positional relation between the probe and the tested matter. Now, in case a tip of the probe is formed approximately at an angle ϑ axially and an angle φ of an edge portion of the tested matter formed axially is smaller than ϑ, the position whereat a flowing point of the tunnel current shifts is a spot where the probe approaches to the edge portion of a tested pattern.

Accordingly, where a high-frequency voltage is superposed on a control signal to a probe position control means, that is, the probe oscillates at high frequency longitudinally or laterally in the drawing, a component in equiphase with the high-frequency voltage of a detected tunnel current signal can be extracted by a signal processing circuit such as high-pass filter, synchronous detection circuit or the like. In case a modulation signal of predetermined frequency is applied to a longitudinal control signal for keeping the probe at a constant distance from a tested surface, that is, the probe oscillates at high frequency longitudinally in the drawing, the outgoing signal coordinates with a longitudinal variation of the tunnel current signal. When the tested pattern and the probe are subjected to a lateral relative movement, a component of the aforementioned predetermined frequency of the tunnel current signal changes in amplitude at a position where a flowing point of the tunnel current shifts from a tip of the probe as Fig. 1A to a side of the probe as Fig. 1B. The reason is that while a change of the tunnel current according to a change in distance between the probe and the tested matter due to the superposed high-frequency voltage is almost constant at the position other than a changed position, if, for example, the flowing point of the tunnel current changes from a state of the probe tip to a state of the probe side (for the probe forming the angle ϑ axially), a variation of distance between the probe and the tested matter becomes much almost sin ϑ times, and thus an amplitude of the signal of predetermined frequency changes accordingly.

Then, in case a modulation signal of predetermined frequency is applied to a lateral control signal of the probe, that is, the probe oscillates at high frequency transversely in the drawing, when the probe is positioned at a flat portion of the tested pattern where a distance between the probe and the tested pattern does not change, the tunnel current scarcely changes irrespective of a lateral oscillation, therefore the aforementioned component of predetermined frequency is also constant (the amplitude being almost zero). However, when the probe is positioned at a portion not flat of the tested pattern, the tunnel current changes sharply according to a lateral modulation, therefore the component of predetermined frequency also changes (to be a predetermined amplitude).

Such positions where a modulated component of the tunnel current changes occur when the probe approaches to an edge portion of the tested pattern, therefore the edge can be detected by measuring the then signal change.

A line width measuring apparatus for detecting the edge will now be described as the first embodiment.

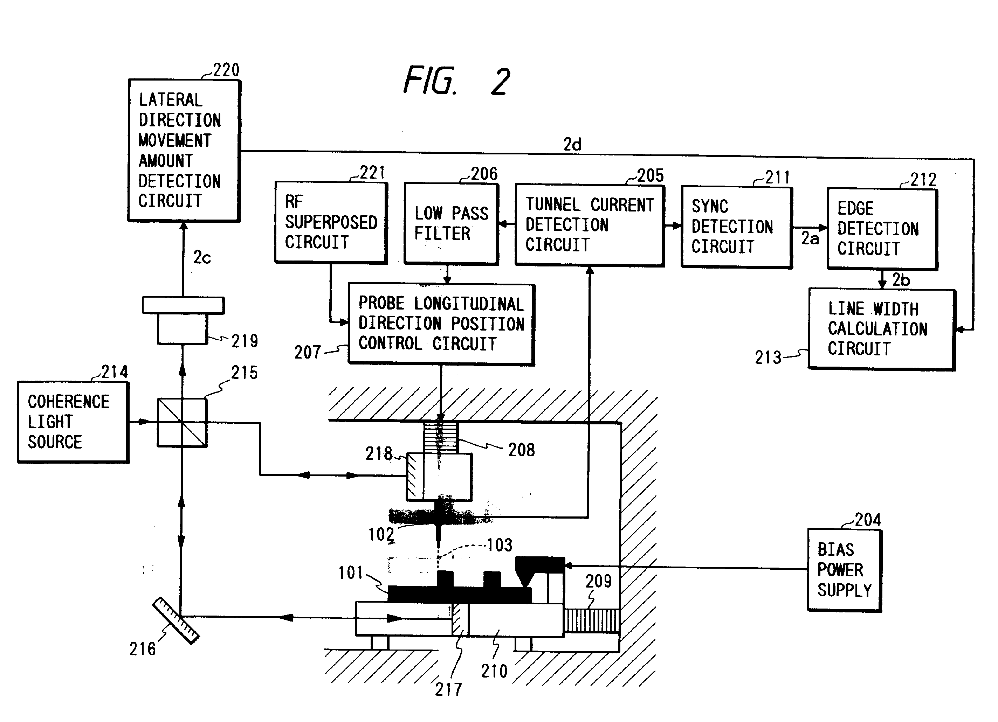

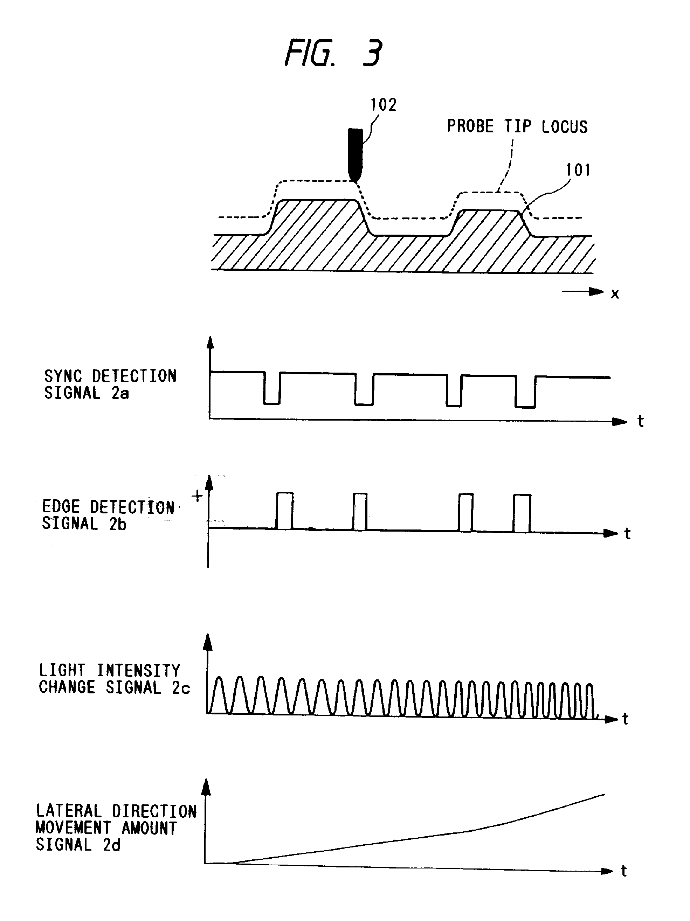

The first embodiment of the invention is represented in Fig. 2, and signal examples in the embodiment are shown in Fig. 3. A bias voltage is applied to the tested pattern having a conductivity by a bias power supply 204, and the tunnel current 103 flowing between the tested pattern 101 and the probe 102 kept close thereto at a distance of 1 nanometer or below by a tunnel current detection circuit 205. A low-frequency component of the detected tunnel current is extracted through a low-pass filter 206, and a longitudinal position of the probe 102 is controlled by a probe longitudinal direction position control circuit 207 and a probe longitudinal direction position control means (piezo-electric element, for example) 208 so as to keep the signal constant. Thus, a probe tip locus barring the oscillation component is as shown on an uppermost stage of Fig. 3. A stage 210 is shifted laterally by stage driving means 209, and the tested pattern 101 is scanned to the probe 102. An edge of the tested pattern 101 is detected by an edge detection circuit 212 on a variation signal 2a obtained from passing the tunnel current signal obtained then through a synchronous detection circuit 211 (particularized hereinlater), and a plurality of edge detection signals 2b are sent to a line width calculation circuit 213. Next, a coherent light is divided into two by a beam splitter 215 from a coherence light source 214, one light is reflected on a mirror 217 fixed on the stage 210 by a mirror 216, and the reflected light is reincident on the beam splitter 215. The other light is reflected on a mirror 218 fixed near the probe 102 and is reincident on the beam splitter 215. The two reflected lights are combined again by the beam splitter 215 and incident on a photodiode 219 as an interference light. In this case, a luminance of the interference light incident on the photodiode 219 changes according to a lateral relative movement of the stage 210 or the tested pattern 101 and the probe 102. For example, if a wave length of the coherent light is λ, the luminance changes for one period where the relative movement comes in λ/2. Accordingly, a relative lateral movement amount can be read at a precision of 1 nanometer by counting a light intensity change signal 2c from the photodiode 219. A lateral direction movement amount signal 2d is obtained from the counting through a lateral direction movement detection circuit 220, and a tested pattern line width measured value is calculated on the line width calculation circuit 213 according to the plural edge detection signal 2b and the lateral direction movement amount signal 2d.

In the edge detection of this embodiment, a predetermined high-frequency voltage is superposed on a control signal to the probe longitudinal position control means 208 by a high frequency superposed circuit 221. The aforementioned longitudinal high-frequency oscillation of the probe 102 is realized thereby. When a component in equiphase with the aforementioned high-frequency voltage is extracted out of the detected tunnel current signal by the synchronous detection circuit 211, the outgoing signal 2a coordinates with an amplitude of the afore-mentioned predetermined frequency component of the tunnel current signal. The predetermined frequency component of the tunnel current signal changes in amplitude at an edge portion of the tested matter as mentioned hereinbefore, therefore the detection signal may be used as an edge detection signal from detecting an output change of the signal 2a on the edge detection circuit 212.

In this embodiment, an arrangement for detection of an edge upper end portion of the tested pattern is such that an output change portion of the signal 2a coming at the odd time is output at the end and the output change portion coming at the even time is output at the beginning. An edge lower portion or edge central portion may be detected otherwise. Then, the low-pass filter 206 intended for position control of the probe is set so as to cut the aforementioned predetermined frequency (oscillation component).

Normally the device applying such STM principle is placed for use entirely on an oscillation damping device. However, a low-frequency oscillation, or oscillation of several Hz frequency concretely is hard to be removed on the oscillation damping device in service currently. Accordingly, a noise of several Hz frequency is capable of arising on signals due to the oscillation. In this embodiment, an edge detection free from an influence of the low-frequency noise is realized by setting a frequency of the signal component extracted by the synchronous detection circuit 211, namely a predetermined frequency value of the high-frequency voltage superposed by the high frequency superposed circuit 221 higher than the noise, or concretely not less than 100 Hz or 100 Hz to 100 KHz for example.

The case where Michelson interferometric process using a single frequency laser as a coherence light source is applied is given in this embodiment, however, a photoheterodyne interferometry using a cycle orthogonal polarization laser such as Zeeman laser or the like may be applied otherwise. Then, in this embodiment, a modulated high-frequency voltage was applied by means for controlling longitudinal relative position of the probe and the tested matter, however, means for controlling lateral relative position of the probe and the tested matter may be employed otherwise, and it is desirable that the two processes be used selectively or concurrently both according to an angle and surface condition of an edge of the tested pattern, a shape of the probe tip obtained. Then, a method for detecting a lateral movement amount of the probe in this embodiment is not necessarily limited to the interferometry, and any length measuring method may be applied subject to having a long-stroke and nanometer-order high resolution and high precision like a grid interferometry indicated in Japanese Patent Examined Publication No. 50-23617 and O Plus E 1986.7.P82, a length measuring method applying TTL type active auto focusing process indicated in Japanese Patent Unexamined Publication No. 54-155832 and Optics 16 (1987) 145, an electric capacity change detecting method, an STM-applied encoder applied previously and others.

A second embodiment of the invention will be described, next. This embodiment refers to an encoder working on the aforementioned principle of edge detection.

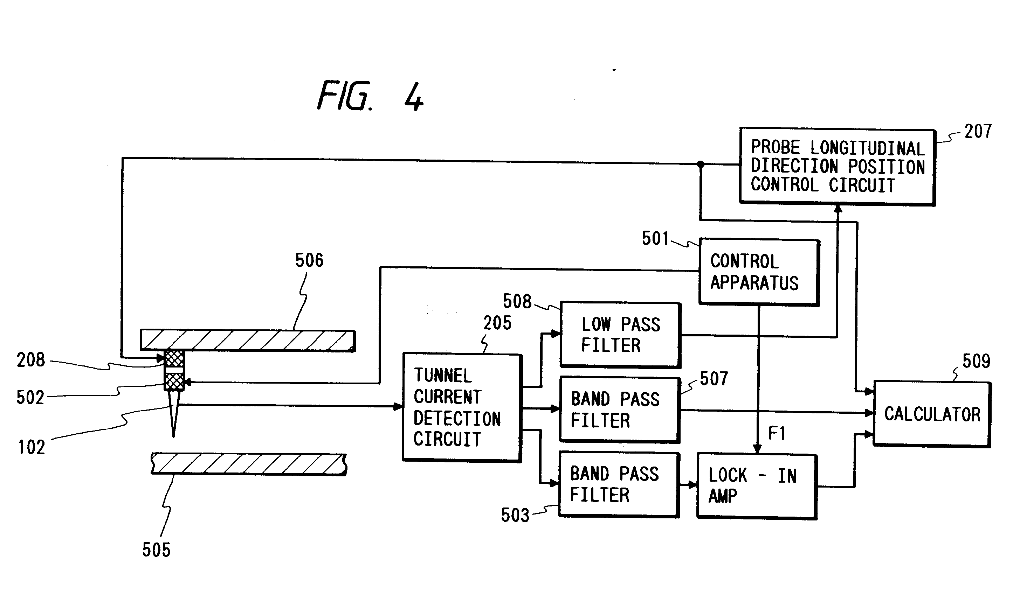

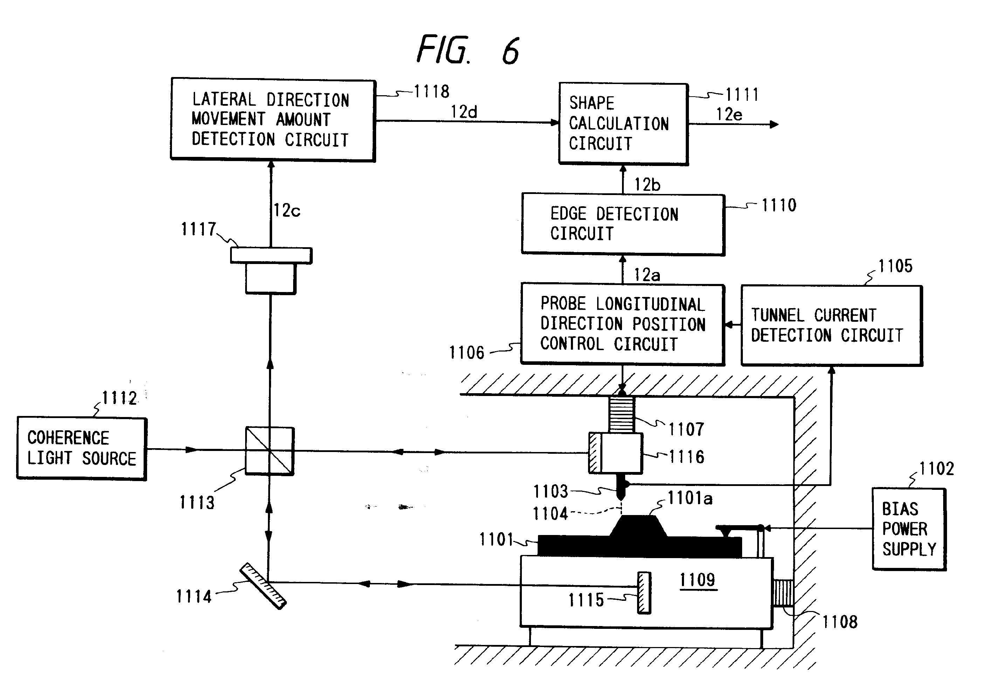

Fig. 4 is a schematic block diagram of an encoder relating to the second embodiment of this invention. Like reference characters denote like members as those described already hereinbefore in the different views of the drawings. A reference numeral 505 represents a scale side support member, 506 represents a probe side support member, one of which is provided on one of two matters moving relatively in the lateral direction in the drawing, and the other of which is provided on the other matter. A bias voltage is applied between the probe 102 and the support member 505. A scale form on the support member 505 viewed in the direction same as Fig. 4 is shown in detail in Fig. 5. A reference numeral 401 represents a reference array consisting of a known array with atom and molecule kept constant in period, 402 represents a scale with edge portions formed at predetermined intervals from sticking another substance on a part of the surface of the reference array 401. While both are indicated in the same proportions in the drawing, the scale 402 is appreciably larger than a tongued-and-grooved face of the reference array 401 actually. In Fig. 4 again, a reference numeral 502 represents a lateral direction driving mechanism for driving the probe 102 in the direction where the relative moving distance is detected (laterally in the drawing), and 501 represents a control apparatus for the lateral direction driving mechanism.

A control signal with a frequency F1 for detecting a moving direction and a frequency F2 for detecting edges which is higher than F1 superposed therefor is provided to the lateral direction driving mechanism 502 by the control apparatus 501, accordingly the probe 102 oscillates infinitesimally on the scale laterally in the drawing as superposing oscillations of the frequency F1 and oscillations of the frequency F2. A reference numeral 503 represents a band-pass filter with the passing frequency band ready for F1, 504 represents a lock-in amplifier for subjecting an output from the band-pass filter 503 to a phase detection by the frequency F1 component of a control signal generated by the control means 501, 507 represents a band-pass filter with the passing frequency band ready for F2, 508 represents a low-pass filter with the passing frequency band set satisfactorily lower than F1, 509 represents an arithmetic operator for calculating a relative moving distance from outputs of the lock-in amplifier 504, the band-pass filter 507 and the probe longitudinal direction position control circuit 207.

A method for measuring a moving distance on the arithmetic operator 509 will be described next. An outgoing signal of the band-pass filter 503 having input a signal from the tunnel current detection circuit 205 is subjected to a phase detection by the lock-in amplifier 504 according to the frequency F1. An output code of the signal coordinates with the relative moving direction as positive if the support member 506 moves rightward in the drawing to the support member 505, and as negative if moving leftward in the drawing. (However, an amplitude of the probe on the frequency F1 is not larger than the width of one tongued-and-grooved face of the reference array.) Accordingly, a relative moving direction of the support member 505 with a scale and the support member 506 with a probe electrode is detected from the code of an outgoing signal of the lock-in amplifier 504. Then, an edge portion detection signal of the scale 402 is obtainable on the principle described in the first embodiment by catching a change of the signal of the band-pass filter 507 with the passing frequency band ready for F2. That is, a fluctuation of the amplitude of a frequency F2 component of the tunnel current signal is detected by the arithmetic operator 509, and the fluctuation detection signal is made to work as an edge portion detection signal of the scale 402. (However, an amplitude of the probe oscillation on the frequency F2 is made satisfactorily larger than the tongued-and-grooved face of the reference array so as not to detect a side portion of the tongued-and-grooved face of the reference array.) The edge portion detection signal is counted according to the moving direction obtained from outgoing signals of the srithmetic operator 509 or the lock-in amplifier 504, thereby detecting the relative moving distance roughly.

Then, a magnitude of the control signal generated by the probe longitudinal direction position control circuit 207 toward the probe longitudinal direction position control means so as to make the signal constant according to a signal isolated by the low-pass filter LPF 508 with the band set satisfactorily lower than the frequency F1 will indicate a tongued-and-grooved state of the reference array to which the probe is opposite. A relative movement amount of the resolution within interval between the scales 402 may be detected by counting an oscillation frequency of the signal in the moving direction. That is, the scale can be interpolated. In case the relative movement is heavy and an amount of the movement must be measured roughly in a short time, the edge detection signal will only be counted, however, since SN ratio of the edge detection signal is high, a precision of the measurement is enhanced.

Other embodiments of the invention will be described. The following embodiments refer to a line width measuring apparatus applying the STM principle and also employing a principle of edge detection different from the above-described embodiments.

A precision of edge detection applying the STM principle and using a tunnel current is high in transverse resolution as mentioned above, accordingly a pattern line width measuring apparatus small in size, simple in construction and having a long-stroke nanometer-order high resolution and high precision will be realized from measuring the length between edges by means of a device applying an optical measuring method ensuring a long stroke and high resolution as driving amount detection means for detecting an amount to drive a probe and a tested matter relatively between edges, an electric capacity change detecting method, a length measuring method by tunneling and the like.

An interferometry represented by Michelson interferometer will be taken up first as an optical one-dimensional length measuring method. A coherent light such as laser beam or the like is divided into two optical paths, each light is irradiated onto two objects producing a relative displacement, the two reflected lights are again combined to interference, and the relative displacement of the two objects is detected according to a change in intensity of the interference light, thereby attaining a resolution at 1 nanometer in combination with a detection technique such as photoheterodyne process, signal phase split and the like. A grid interference method disclosed in Japanese Patent Publication No. 50-23617 and "O Plus E, 1986, 7, P82" will be taken up secondly, wherein a diffraction grid scale of several-micrometer pitches is mounted on an object to measure a displacement, a coherent light such as laser beam or the like is irradiated on the scale vertically (the direction of displacement being parallel with the scale), a plurality of diffracted lights are combined to interference, and a displacement of the measuring object is detected from a change in intensity of the interference light, thereby attaining a resolution of nanometer order in combination with a detection technique such as photoheterodyne process, signal phase split and the like. Thirdly, there is a length measuring method applying TTL type active auto focusing as disclosed in Japanese Patent Laid-Open No. 54-155832 and "Optics 16 (1987) 145", wherein beams of light are irradiated onto an object to be measured for displacement through an objective from outside the axis, a dislocation of beams of the reflected light due to a shift of the object is detected by a position detection light receiving element placed at a position conjugate with an irradiation point, thereby attaining a displacement detection resolution of the measuring object at 1 nanometer.

The electric capacity change detecting method comprises providing metallic plates on two objects producing a relative displacement each, thus obtaining an amount of the relative displacement from a change in electric capacity between the plates. Here, an electric capacity C between the plates is expressed as C = εS/d (ε: dielectric constant of medium between plates, S: plate area, d: distance between plates), and it is found that a change in the distance between plates, namely an amount of relative displacement is obtainable from a change in electric capacity. Then, an AC voltage is applied between the plates, an impedance between the plates is detected, thereby detecting the electric capacity. A nanometer-order relative displacement detection resolution will be attained according to such method for detecting a change in the electric capacity.

In case the aforementioned STM principle is applied to drive amount detecting means, a probe and a reference scale kept opposite close each other are provided on two objects producing a relative displacement, a voltage is applied therebetween, and a tunnel current is carried. A relative displacement amount is then detected by detecting a change in the tunnel current arising when a probe tip scans the reference scale according to the relative displacement of the two objects. A relative displacement detection resolution at 1 nanometer or below will be attained from using an atomic array of conductive crystal cleavage face as the reference scale.

Accordingly, a plurality of edge intervals of a tested pattern can be detected at a long-stroke and nanometer-order resolution by detecting a relative lateral movement amount between the tested pattern and the probe kept close thereto in a combined application of these optical one-dimensional length measuring method, electric capacity change detecting method or length measuring method by tunneling.

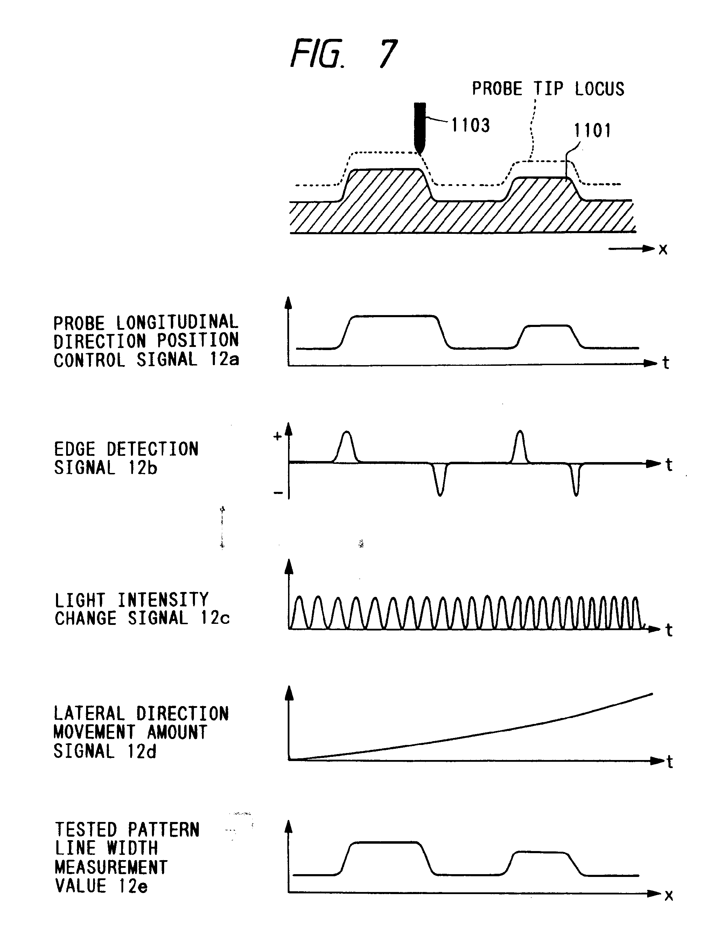

Fig. 6 is a block diagram of a line width measuring apparatus given in a third embodiment of the invention, and Fig. 7 is a waveform diagram showing signal examples in each part of the apparatus.

As shown in Fig. 6. the line width measuring apparatus comprises a stage 1109 holding a tested matter 1101 on which a conductive tested pattern 1101a is formed, a conductive probe 1103 with the tip disposed close to the tested matter 1101, stage driving means 1108 for driving the probe 1103 and the stage 1109 in the direction of measurement, a bias power supply 1102 for impressing a voltage between the probe 1103 and the tested pattern 1101a to generate a tunnel current, a tunnel current detection circuit 1105 for detecting the tunnel current, a probe longitudinal direction position control circuit 1106 and probe longitudinal direction position control means 1107 for controlling a distance between the probe 1103 and the tested matter 1101 so as to keep the tunnel current detected by the tunnel current detection circuit 1105 constant, an edge detection circuit 1110 for detecting an edge of the tested pattern 1101a according to a control signal 12a generated from the probe longitudinal direction position control circuit 1106, a coherence light source 1112 for detecting a relative drive amount of the probe 1103 and the stage 1109 in the direction of measurement, a beam splitter 1113, mirrors 1114, 1115, 1116, a photodiode 1117 and a lateral direction movement detection circuit 1118, a shape calculation circuit 1111 for calculating an edge position of the tested pattern 1101a detected on detection signals 12d, 12b generated from the lateral direction movement detection circuit 1118 and the edge detection circuit 1110 and outputting a line width measurement value 12e of the tested pattern 1101a.

In the construction described above, a bias voltage is applied to the tested pattern 1101a by the bias power supply 1102, and a tunnel current 1104 flowing between the tested pattern 1101a and the probe 1103 kept opposite close thereto at a distance not longer than 1 nanometer is detected by the tunnel current detection circuit 1105. Then, the probe 1103 is subjected to a longitudinal position control by the probe longitudinal direction position control circuit 1106 and the probe lingitudinal direction position control means 1107 so as to keep the detected tunnel current constant. The stage 1109 is moved transversely by the stage driving means 1108 concurrently therewith, and a tip of the probe 1103 scans the tested pattern 1101a. A locus of the probe tip in this case is as shown on an uppermost stage of Fig. 7. Then an edge of the tested pattern 1101a is detected by the edge detection circuit 1110 from the probe longitudinal direction position control signal 12a thus obtained, and a plural edge detection signal 12b is output to the shape calculation circuit 1111.

The edge detection circuit 1110 includes a differentiation circuit, and when the signal 12a changes in output at the edge portion, an output (differentiation signal) according to the change speed is generated. The change speed corresponding signal is used as an edge detection signal. A position where the signal is maximized in value or the center position of a half-amplitude level is used as the edge position. The edge detection signal 12b becomes positive if, for example, the edge faces right upward on Fig. 7, and negative if left upward according to how the edge to scan faces.

On the other hand, a coherent light of a single frequency from the coherence light source 1112 is divided into two by the beam splitter 1113 in parallel therewith, one light is incident on the mirror 1115 fixed on the stage 1109 through the mirror 1114, the reflected light is reincident on the beam splitter 1113, the other light is incident on the mirror 1116 fixed near the probe 1103, and the reflected light is reincident on the beam splitter 1113. Then, the two reflected lights are combined again by the beam splitter 1113 and incident on the photodiode 1117 as an interference light. In this case, there arises a change in brightness of the interference light incident on the photodiode 1117 according to a lateral relative movement of the stage 1109 or the tested pattern 1101a and the probe 1103. For example, if a wave length of the coherent light is λ, the brightness changes for one period where relative movement amount is λ/2. Accordingly, the relative lateral movement amount can be read at a precision of 1 nanometer by counting a light intensity change signal 12c from the photodiode 1117. The counting is effected on the lateral direction movement detection circuit 1118 to obtain the lateral direction movement amount signal 12d, which is output to the shape calculation circuit 1111.

In the shape calculation circuit 1111, the tested pattern line width measurement value 12e is calculated and output according to the plural edge detection signal 12b and lateral direction movement amount signal 12d.

In the example, a pattern line width value is measured according to an increment of the lateral direction movement amount signal from generation of a positive edge detection signal until generation of a negative edge detection signal, and the result is output.

Then, the case where Michelson interferometry using a single frequency laser as the coherence light source 1112 is applied is indicated in this embodiment, however, a photoheterodyne interferometry using a double frequency orthogonal polarization laser such as Zeeman laser or the like may be applied otherwise.

### Embodiment 4

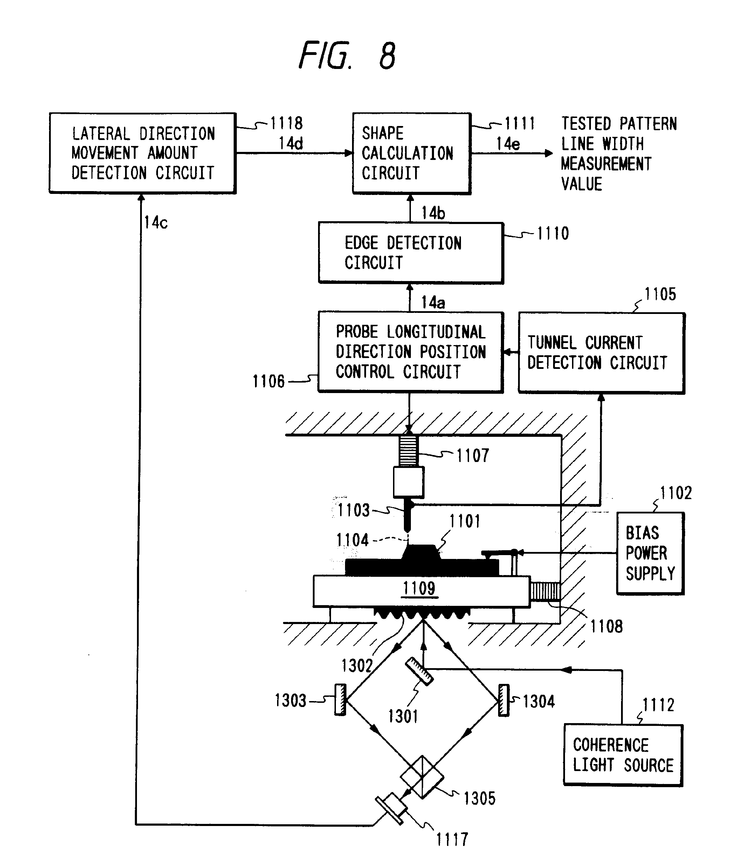

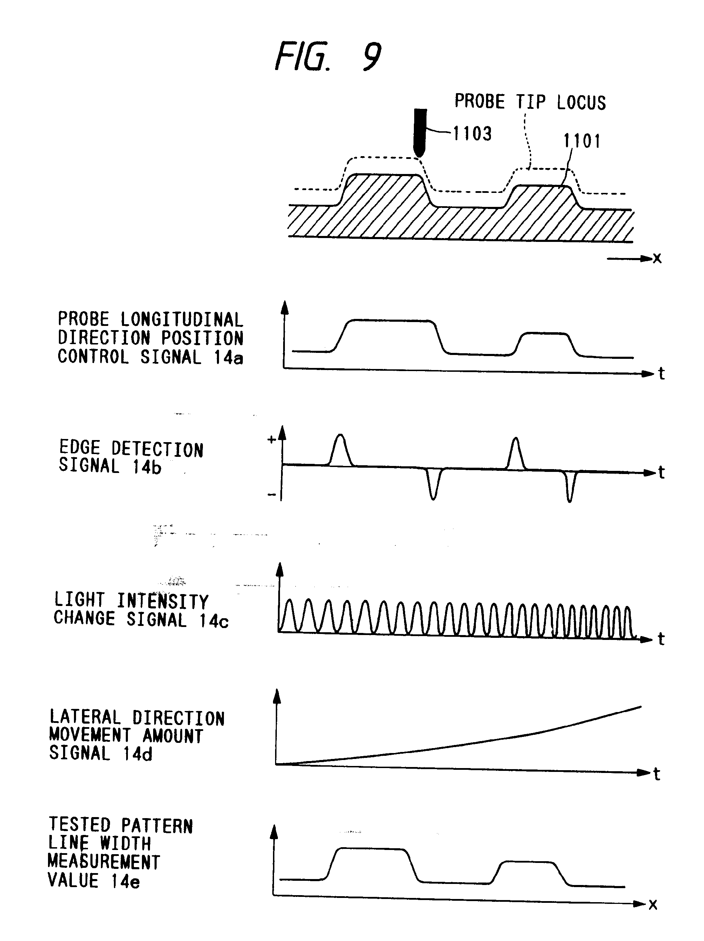

Fig. 8 is a block diagram of a line width measuring apparatus given in a fourth embodiment of the invention, and Fig. 9 is a waveform diagram showing signal examples in each part of the apparatus.

As shown in Fig. 8, the apparatus is different from that of Fig. 6 only in a construction of means for detecting a relative drive amount of the probe 1103 and the stage 1109 in the direction of measurement, the relative drive amount detection means comprises a diffraction grid 1302 fixed on the stage 1109, a mirror 1301 for getting an output light of the coherence light source 1112 incident on the diffraction grid 1302, mirrors 1303, 1304 reflecting for combining lights diffracted by the diffraction grid 1302, and a beam splitter 1305 for combining the diffracted lights reflected on the mirrors 1303, 1304 to incidence on the photodiode 1117.

In the above-described construction, a coherent light from the coherence light source 1112 is incident on the diffraction grid 1302 through the mirror 1301, and when ± n-th degree diffracted lights thus obtained are reflected by the mirrors 1303, 1304, and incident on the beam splitter 1305, the two diffracted lights are combined together by the beam splitter 1305, and then incident on the photodiode 1117 as an interference light. In this case, there arises a change in brightness of the interference light incident on the photodiode 1117 by a lateral relative movement of the stage 1109 or the tested pattern 1101a and the probe 1103. For example, if the relative movement amount corresponds to one pitch of the diffraction grid 1302, then in case ± first degree diffracted lights are made to interfere, the brightness comes to change for two periods. Accordingly, a lateral direction movement amount signal 14d is obtained by counting a light intensity change signal 14c generated from the photodiode 1117 on the lateral direction movement detection circuit 1118, and is outputted to the shape calculation circuit 1113.

A tested pattern line width measurement value 14e is calculated and output by the shape calculation circuit 1113 as in the case of third embodiment according to the lateral direction movement amount signal 14d and a plurality of edge detection signals 14b obtained as in the case of the third embodiment.

Then, the case where the method is combined with the grid interferometry using a single frequency laser as the coherence light source 1112 is indicated in this embodiment, however, it may be combined with the grid interferometry according to the photoheterodyne process using a double cycle orthogonal polarization laser such as Zeeman laser or the like.

### Embodiment 5

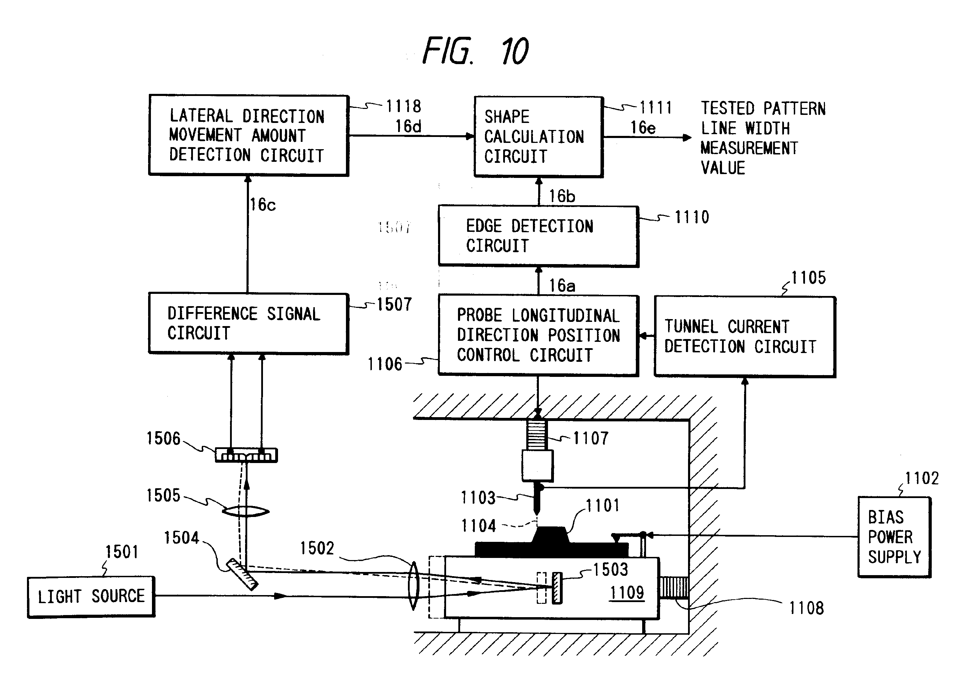

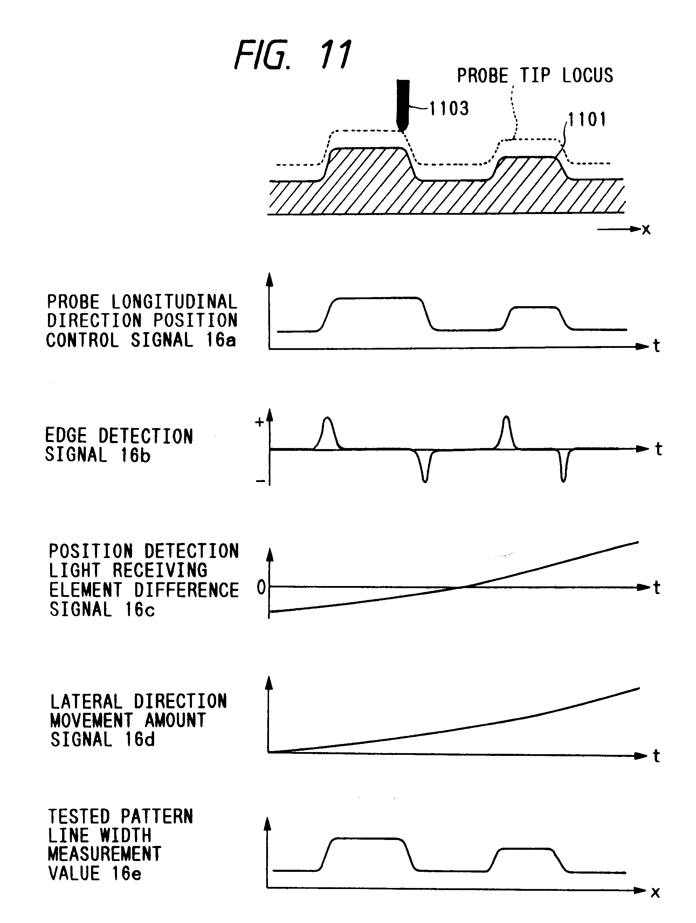

Fig. 10 is a block diagram of a line width measuring apparatus relating to a fifth embodiment of the invention, and Fig. 11 is a waveform diagram showing signal examples in each part of the apparatus.

As shown in Fig. 10, the apparatus is also different from that of Fig. 6 only in a construction of means for detecting a relative drive amount, the relative drive amount detection means comprising a light source 1501, a mirror 1503 fixed on the stage 1109, an objective lens 1502 for getting an output light of the light source 1501 incident on the mirror 1503 and transmitting the reflected light, an imaging lens 1505 for imaging the transmitted light, a position detection light receiving element 1506 for detecting a position of the image, and a difference signal circuit 1507 for outputting a difference signal 16c between a light quantity signal integral value coming rightward of the center position of the position detection light receiving element 1506 and that of coming leftward thereof to the lateral direction movement detection circuit 1118.

In such construction, a parallel luminous flux from the light source 1501 is incident on the objective lens 1502 outside the axis, and the transmitted light is reflected by the mirror 1503 fixed on the stage 1109. In this case, a position of the objective lens 1502 is controlled so that a position of the mirror 1503 will come near a focus of the objective lens 1502. A flux of the reflected light becomes parallel again through the objective lens 1502 and is incident on the center position of the position detection light receiving element 1506 by way of a mirror 1504 and the imaging lens 1505. In this case, the center position of the position detection light receiving element 1506 is controlled so as to come on a focus position of the imaging lens 1505. Here, the luminous flux incident on the position detection light receiving element 1506 becomes dislocated laterally of the direction of incidence according to a lateral relative movement of the stage 1109 or the tested pattern 1101 and the probe 1103. Accordingly, the difference signal 16c between a light quantity signal integral value coming rightward of a center position of the position detection light receiving element 1506 and that of coming leftward thereof is obtained by the difference signal circuit 1507, and since the lateral relative movement amount can be read at a precision of 1 nanometer by monitoring it, a lateral direction movement amount signal 16d is obtained through the lateral direction movement detection circuit 1118, which is output to the shape calculation circuit 1111. In the shape calculation circuit 1111, a tested pattern line width measurement value 16e is calculated and output as in the case of the third embodiment according to the lateral direction movement amount signal 16d and a plurality of edge detection signals 16b obtained as in the case of the third embodiment.

### Embodiment 6

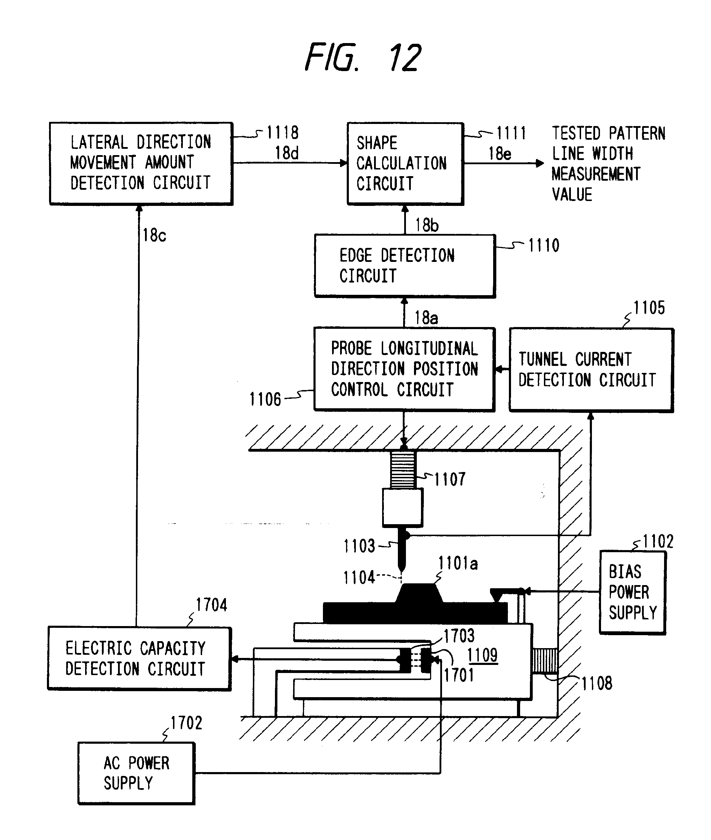

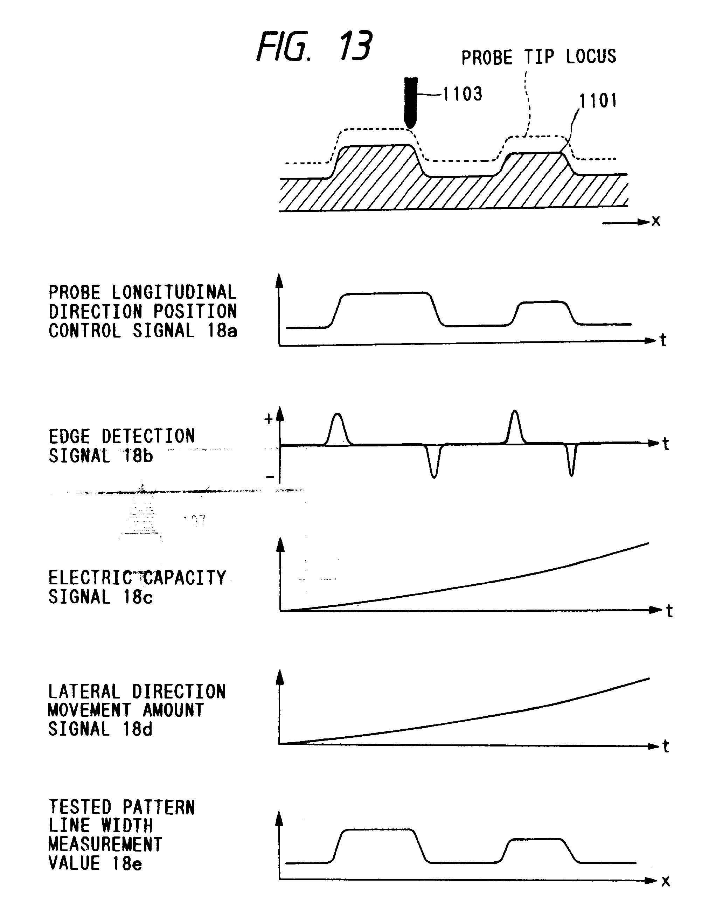

Fig. 12 is a block diagram of a line width measuring apparatus given in a sixth embodiment of the invention, and Fig. 13 is a waveform diagram showing signal examples in each part of the apparatus.

As shown in Fig. 12, the apparatus is also different from that of Fig. 6 only in a construction of the relative drive amount detection means, the relative drive amount detection means comprising a plate 1701 fixed on the stage 1109, a plate 1703 having the position fixed against the probe 1103, an AC power supply 1702 for applying an AC voltage between the plates 1701, 1703, and an electric capacity detection circuit 1704 for detecting an electric capacity between the plates 1701, 1703 and generating an electric capacity signal 18c to the lateral direction movement detection circuit 1118.

In the above-described construction, an AC voltage is applied to the plate 1701 by the AC power supply 1702, and an electric capacity between the plates 1701 and 1703 is detected by the electric capacity detection circuit 1704, however, when the stage 1109 or the tested pattern 1101 and the probe 1103 make a relative movement transversely, the electric capacity between the plates 1701, 1703 changes. Accordingly, the lateral relative movement amount can be read at a precision of 1 nanometer by monitoring the electric capacity signal 18c, therefore a lateral direction movement amount signal 18d is obtained through the lateral direction movement detection circuit 1118, and is output to the shape calculation circuit 1111. In the shape calculation circuit 1111, a tested pattern line width measurement value 18e is calculated and output as in the case of the third embodiment according to the lateral direction movement amount signal 18d and a plurality of edge detection signals 18b obtained as in the case of the third embodiment.

### Embodiment 7

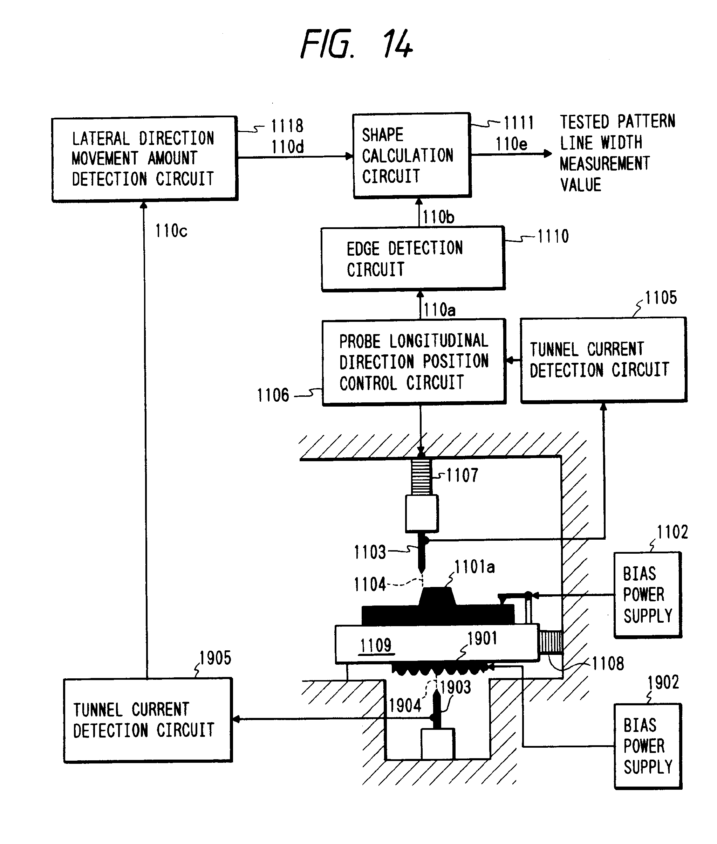

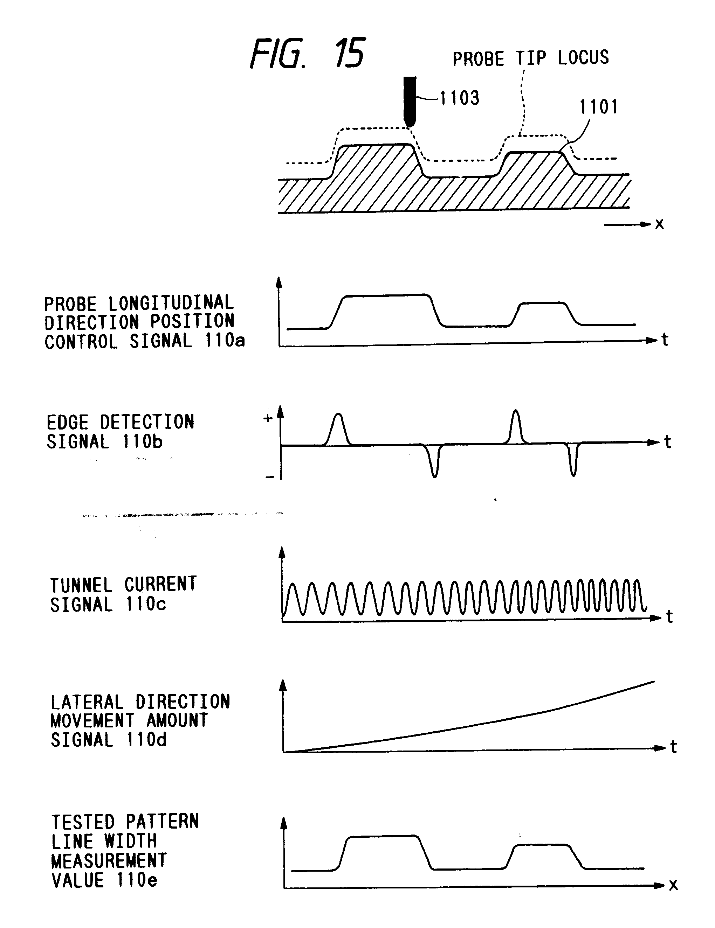

Fig. 14 is a block diagram of a line width measuring apparatus relating to a seventh embodiment of the invention, and Fig. 15 is a waveform diagram showing signal examples in each part of the apparatus.

The apparatus is also different from that of Fig. 6 only in a construction of the relative drive amount detection means, the relative drive amount detection means comprising a conductive reference scale 1901 fixed on the stage 1109, a probe 1903 having the tip kept close to the reference scale 1901 at 1 nanometer or below and the position fixed against the probe 1103, a bias power supply 1902 for applying a bias voltage between the reference scale 1901 and the probe 1903, and a tunnel current detection circuit 1905 for detecting a tunnel current 1904 flowing between the reference scale 1901 and the probe 1903 and generating a tunnel current signal 110c to the lateral direction movement detection circuit 1118.

In the above-described construction, a bias voltage is applied to the reference scale 1901, and the tunnel current 1904 flowing between the probe 1903 and the reference scale 1901 is detected by the tunnel current detection circuit 1905, however, when the stage 1109 or the tested pattern 1101a and the probe 1103 move relatively in the lateral direction, an interval between the reference scale 1901 and the probe 1903 changes at a pitch period of the reference scale 1901, and the tunnel current 1904 changes in intensity. For example, if an atomic array of cleavage plane surface of a conductive crystal such as graphite or the like is used as the reference scale 1901, and an interatomic distance is 0.2 nanometers, then the change in intensity corresponds to one period when the relative movement amount is 0.2 nanometers. Accordingly, the lateral relative movement amount can be read at a precision of 1 nanometer or below from the tunnel current signal 110c from the tunnel current detection circuit 1905, and hence the lateral direction movement detection circuit 1118 obtains a lateral direction movement amount signal 110d through counting the tunnel current signal 110c, and outputs it to the shape calculation circuit 1111.

In the shape calculation circuit 1111, a tested pattern line width measurement value 110e is calculated and output as in the case of the third embodiment according to the lateral direction movement amount signal 110d and a plurality of edge detection signals 110b obtained as in the case of the third embodiment.

Further embodiments of the invention will be described. The following embodiments refer to a line width measuring apparatus for edge detection applying other principles of STM.

An atomic force microscope (hereinafter referred to as AFM) capable of measuring insulating materials and a magnetic force microscope (hereinafter referred to as MFM) capable of measuring magnetic materials have been invented as those for which STM is developed, and these are intended for measuring an infinitesimal shape and size of insulating materials and magnetic materials.

AFM and MFM as those for which STM is developed are capable of obtaining information on shape of the insulating material surface and structure of the magnetic material surface at high resolution from detecting an atomic force and magnetic force working between the surface of insulating material and magnetic material samples and a lever (lever consisting of a magnetic material in the case of magnetic material samples) kept close to the surface as far as 1 nanometer or so [G. Binning et al., Phys. Rev. Lett. 56 (1986) 930, Y. Martin et al., Appl. Phys. Lett. 50 (1987) 1455].

Accordingly, an edge of the tested pattern may be detected at a transverse resolution of 0.1 nanometers by detecting an atomic force or magnetic force working between the tested pattern of insulating materials or magnetic materials and the lever kept close thereto from applying AFM or MFM principle.

Then, a relative lateral movement of the tested pattern and the lever kept close thereto is detected from applying optical one-dimensional length measuring method as described hereinbefore, electric capacity change detecting method or length measuring method by tunneling, thereby detecting a plural edge interval of the tested pattern in a long-stroke and nanometer-order resolution.

### Example 8

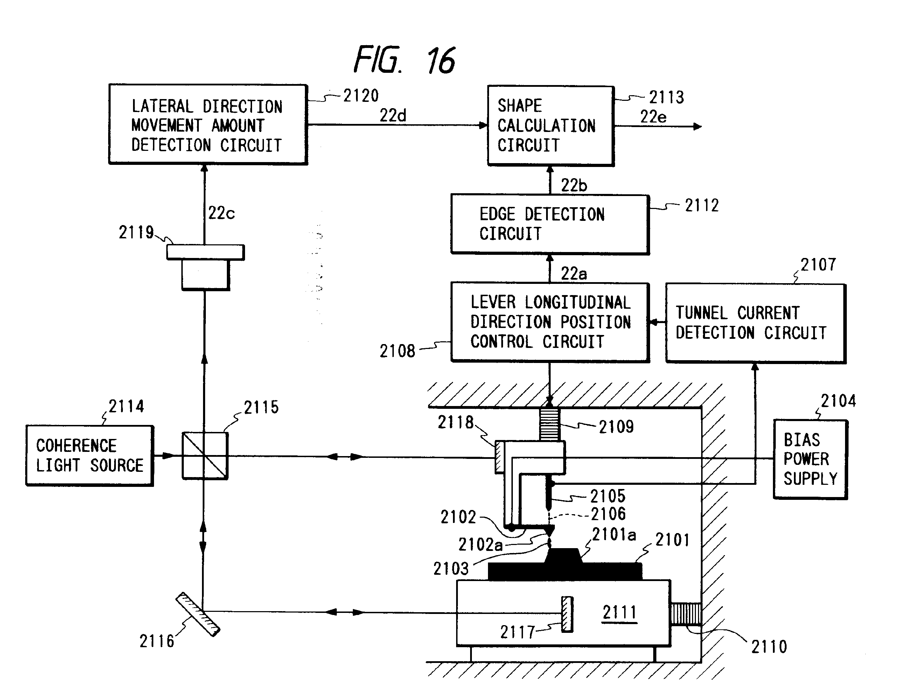

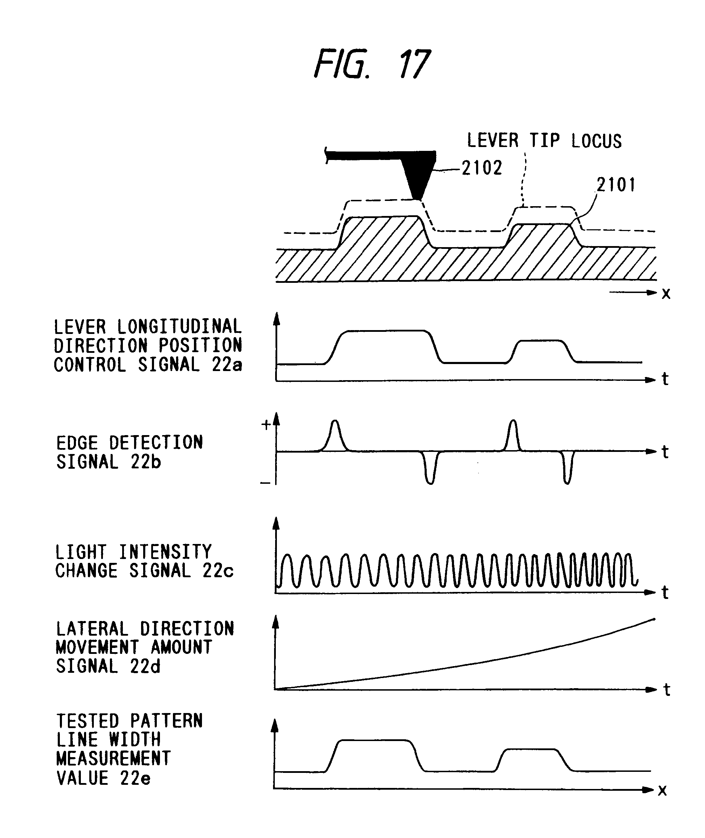

Fig. 16 is a block diagram of a line width measuring apparatus relating to an eighth embodiment of the invention, and Fig. 17 is a waveform diagram showing signal examples in each part of the apparatus.

As shown in Fig. 16, the line width measuring apparatus comprises a stage 2111 for holding a tested matter 2101 on which an insulating tested pattern 2101a is formed, a lever 2102 having its one end fixed, provided with a projection 2102a subjected to an atomic force 2103 as a working force from the tested matter 2101 on the other free end and disposing the projection 2102a close to the tested matter 2101, stage driving means for driving the lever 2102 and the stage 2111 in the direction of measurement, a bias power supply 2104 for detecting the atomic force 2103 as a displacement of the free end of the lever 2102, a probe 2105 and a tunnel current detection circuit 2107, a lever longitudinal direction position control circuit 2108 and lever longitudinal direction position control means 2109 for controlling a distance between the lever 2102 and the tested matter 2101 so as to keep a working force detected thereby constant, an edge detection circuit for detecting an edge of the tested pattern 2101a according to a control signal 22a generated from the lever longitudinal direction position control circuit 2108, a coherence light source 2114, a beam splitter 2115, mirrors 2116, 2117, 2118, a photodiode 2119 and a lateral direction movement detection circuit 2120 for detecting a relative movement amount of the lever 2102 and the stage 2111 in the direction of measurement, and a shape calculation circuit 2113 for outputting a line width measurement value 22e of the tested pattern 2101a through obtaining an edge position of the tested pattern 2102a detected according to detection signals 22d, 22b generated from the lateral direction movement detection circuit 2120 and the edge detection circuit 2112.

In the above-described construction, a flexure arises on the lever 2102 from the atomic force 2103 working between the insulating tested pattern 2101a and the lever 2102 kept opposite close thereto at a distance of 1 nanometer or below. Then, a bias voltage is applied by the bias power supply 2104 on the back of the lever 2102 subjected to a conductivity treatment through metal coating by vaporization or other process, and a tunnel current 2106 flowing between the lever 2102 and the probe 2105 kept opposite close to the back thereof at a distance of 1 nanometer or below is detected by the tunnel current detection circuit 2107. Then, a longitudinal position of the lever 2102 is controlled by the lever longitudinal direction position control circuit 2108 and the lever longitudinal direction position control means 2109 so as to keep the detected tunnel current constant, that is, the flexure of the lever 2102 constant. Then the stage 2111 is moved laterally at the same time by stage driving means 2110 and scans the tested pattern 2101 against the projection 2102a of the lever 2102. A locus of the lever tip in this case is as shown on an uppermost stage of Fig. 17.

An edge of the tested pattern 2101a is detected by the edge detection circuit 2112 according to the lever longitudinal direction position control signal 22a thus obtained, and a plurality of edge detection signals 22b are output to the shape calculation circuit 2113. The edge detection circuit 2112 includes a differentiation circuit, and generates an output (differential signal) according to a speed of change in output of the signal 22a so caused at the edge portion. The change speed corresponding signal is used as an edge signal. For edge position, a position where the signal is maximized in value or center position of half-amplitude level is used. The edge signal 22b holds positive if, for example, the edge comes upward right on Fig. 17 but negative if upward left according to how the edge to scan faces.

An arrangement is such that a longitudinal position of the lever 2102 is controlled, and a detection signal is obtained from the control signal, therefore the projection will never come in contact with the pattern irrespective of a big difference in step of the pattern.

In parallel therewith, on the other hand, a coherent light of single frequency from the coherence light source 2114 is divided into two by the beam splitter 2115, one light is incident on the mirror 2117 fixed on the stage 2111 through the mirror 2116, and the reflected light is reincident on the beam splitter 2115, the other light is incident on the mirror 2118 fixed near the lever 2102 and the reflected light is reincident on the beam splitter 2115. Then, the two reflected lights are combined again by the beam splitter 2115 and are incident on the photodiode 2119 as an interference light. In this case, there arises a change in brightness of the interference light incident on the photodiode 2119 according to a lateral relative movement of the stage 2111 or the tested pattern 2101a and the lever 2102. For example, if a wave length of the coherent light is λ, the brightness for one period changes when the relative movement amount is λ/2. Accordingly, the relative lateral movement amount can be read at a precision of 1 nanometer by counting a light intensity change signal 22c from the photodiode 2119. From carrying out the counting on the lateral direction movement detection circuit 2120, the lateral direction movement amount signal 22d is obtained and output to the shape calculation circuit 2113.

In the shape calculation circuit 2113, the line width measurement value 22e is calculated and output according to the plural edge detection signal 22b and the lateral direction movement amount signal 22d.

In this example the pattern line width value is measured according to an increment of the lateral direction movement amount signal from a generation of the positive edge detection signal until a generation of the negative edge detection signal, and the result is output.

Then, the case where Michelson interferometry using a single frequency as the coherence light source 2114 is applied is indicated in this embodiment, however, a photoheterodyne interferometry using a double-cycle orthogonal polarization laser such as Zeeman laser or the like may be applied otherwide.

### Embodiment 9

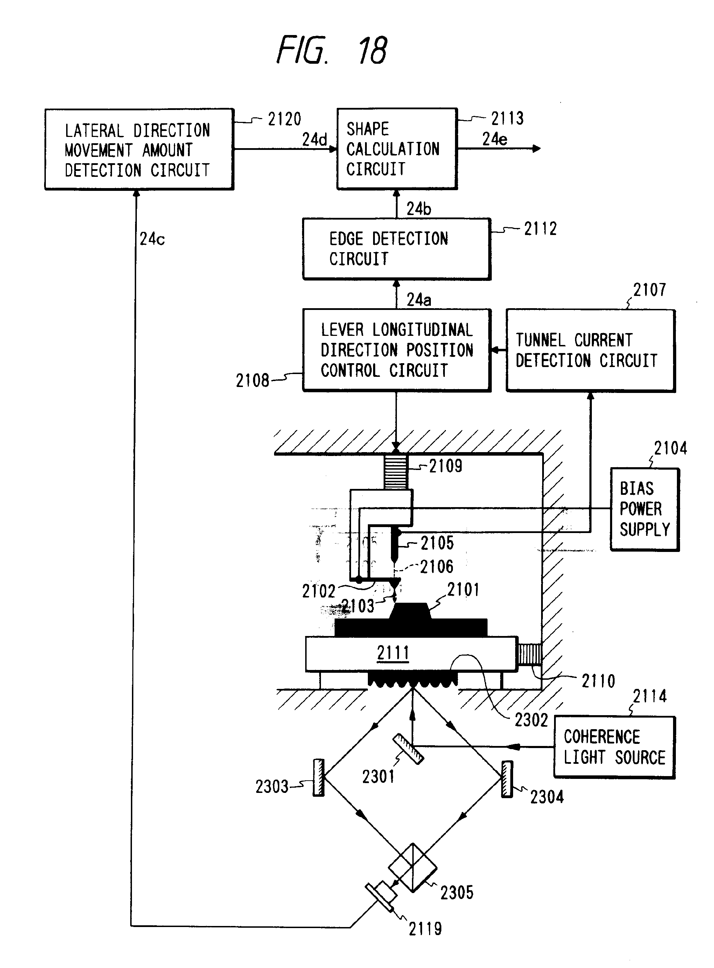

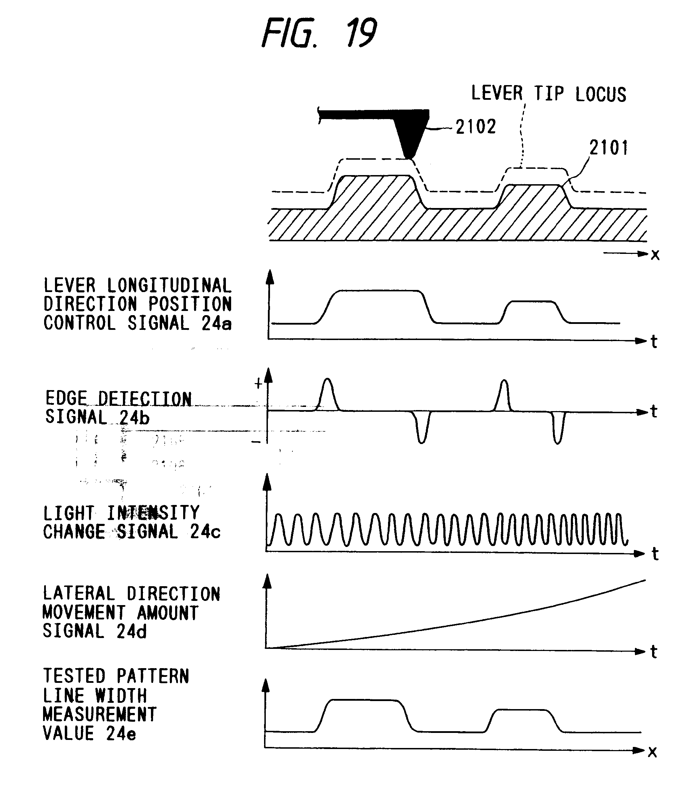

Fig. 18 is a block diagram of a line width measuring apparatus relating to a ninth embodiment of the invention, and Fig. 19 is a waveform diagram of signal examples in each part of the apparatus.

As shown in Fig. 18, the apparatus is different from that of Fig. 16 only in the construction of means for detecting a relative drive amount of the lever 2102 and the stage 2111 in the direction of measurement, the relative drive amount detection means comprising a diffraction grid 2302 fixed on the stage 2111, mirrors 2303, 2304 for combining output lights of the coherence light source 2114, and a beam splitter 2305 for combining diffracted lights reflected by the mirrors 2303, 2304 to be incident on the beam splitter 2305.

In the above-described construction, a coherent light from the coherence light source 2114 is incident on the diffraction grid 2302 through the mirror 2301, and when ± n-th degree diffracted lights obtained thereby are reflected by the mirrors 2303, 2304 to be incident on the beam splitter 2305, the two diffracted lights are combined by the beam splitter 2305, and incident on the photodiode 2119 as an interference light. In this case, there arises a change in brightness of the interference light incident on the photodiode 2119 according to a lateral relative movement of the stage 2111 or the tested pattern 2101 and the lever 2102. For example, if the relative movement amount corresponds to one pitch of the diffraction grid 2302, the brightness change comes in two periods when ± first degree diffracted lights are made to interfere. Accordingly, a lateral direction movement amount signal 24d is obtained from counting a light intensity change signal 24c generated by the photodiode 2119 on the lateral direction movement detection circuit 2120, and is output to the shape calculation circuit 2113.

In the shape calculation circuit 2113 a tested pattern line width measurement value 24e is calculated and output as in the case of the embodiment 8 according to the lateral direction movement amount signal 24d and a plurality of edge detection signals 24b obtained as in the case of the embodiment 8.

Then, the case where the method is combined with a grid interferometry using a single frequency laser as the coherence light source 2114 is indicated in this embodiment, however, it may be combined otherwise with grid interferometry according to a photoheterodyne process using a double-cycle orthogonal polarization laser such as Zeeman laser or the like.

### Embodiment 10

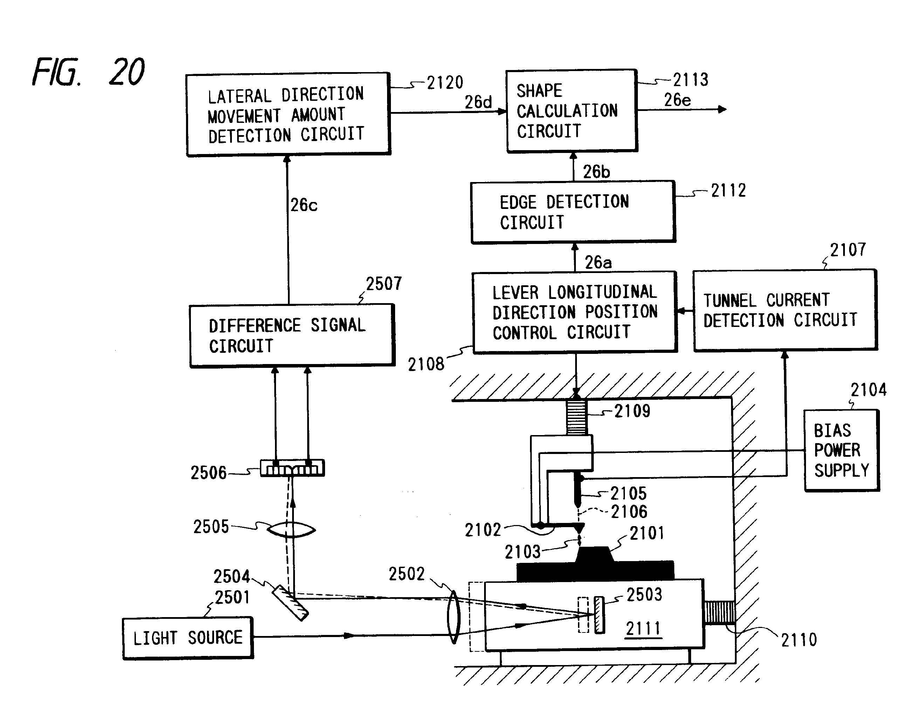

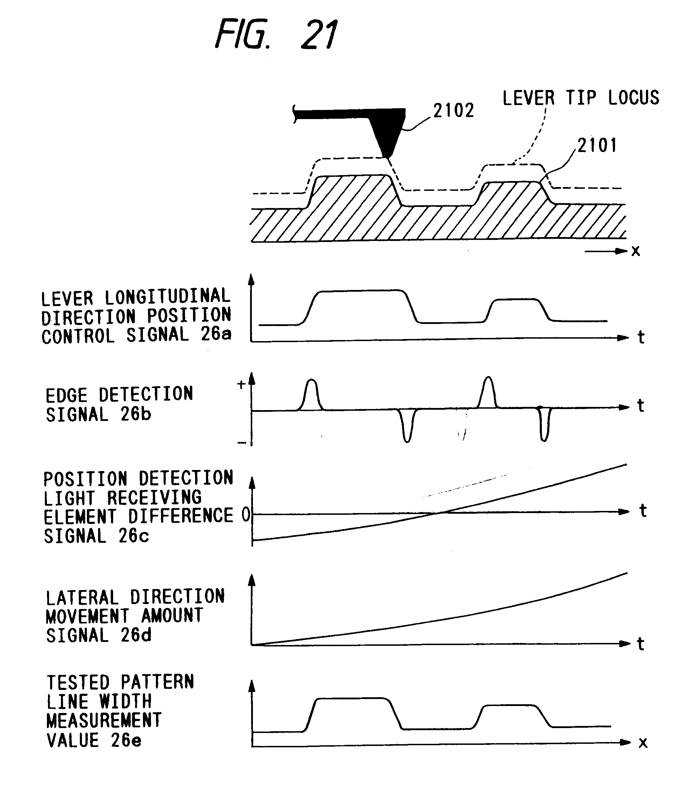

Fig. 20 is a block diagram of a line width measuring apparatus relating to a tenth embodiment of the invention, and Fig. 21 is a waveform diagram showing signal examples in each part of the apparatus.

The apparatus is also different from that of Fig. 16 only in construction of the relative drive amount detection means as shown in Fig. 20, the relative drive amount detection means comprising a light source 2501, a mirror 2503 fixed on the stage 2111, an objective lens 2502 for getting an output light of the light source 2501 incident on the mirror 2503 and transmitting the reflected light, an imaging lens 2505 for imaging the transmitted light, a position detection light receiving element 2506 for detecting a position of the image, and a difference signal circuit 2507 for outputting a difference signal 26c between a light quantity signal integral value coming rightward of a center position of the position detection light receiving element 2506 and that of coming leftward to the lateral direction movement detection circuit 2120.

In the above-described construction, a parallel luminous flux from the light source 2501 is incident on the objective lens 2502 outside the axis, and the transmitted light is reflected by the mirror 2503 fixed on the stage 2111. In this case, a position of the objective lens 2502 is controlled so that the mirror 2503 will be positioned near a focus of the objective lens 2502. A flux of the reflected light passes through the objective lens 2502 to be parallel again, and is incident on a center position of the position detection light receiving element 2506 by way of a mirror 2504 and the imaging lens 2505. In this case, the center position of the position detection light receiving element 2506 is controlled so as to come on a focus position of the imaging lens 2505. Here, the luminous flux incident on the position detection light receiving element 2506 is dislocated laterally in the direction of incidence according to a lateral relative movement of the stage 2111 or the tested pattern 2101 and the lever 2102. Accordingly, the difference signal 26c between a light quantity signal integral value coming rightward of the center position of the position detection light receiving element 2506 and that of coming leftward thereof is obtained through the difference signal circuit 2507, and from monitoring it, the lateral relative movement amount can be read at a precision of 1 nanometer, therefore a lateral direction movement amount signal 26d is obtained through the lateral direction movement detection circuit 2120 and output to the shape calculation circuit 2113. In the shape calculation circuit 2113, a tested pattern line width measurement value 26e is calculated and output as in the case of the eighth embodiment according to the lateral direction movement amount signal 26d and a plurality of edge detection signals 26b obtained as in the case of the eighth embodiment.

### Embodiment 11

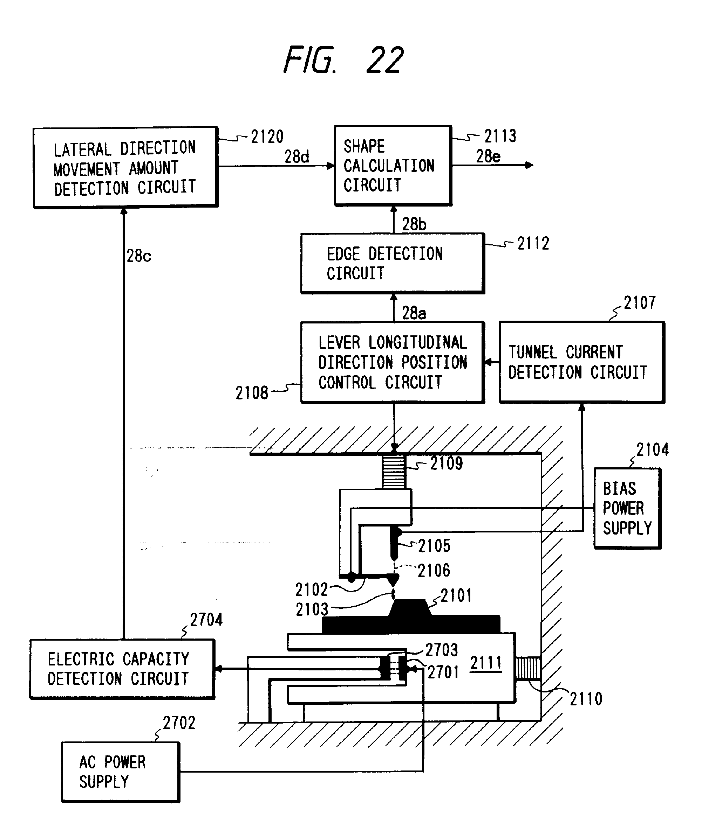

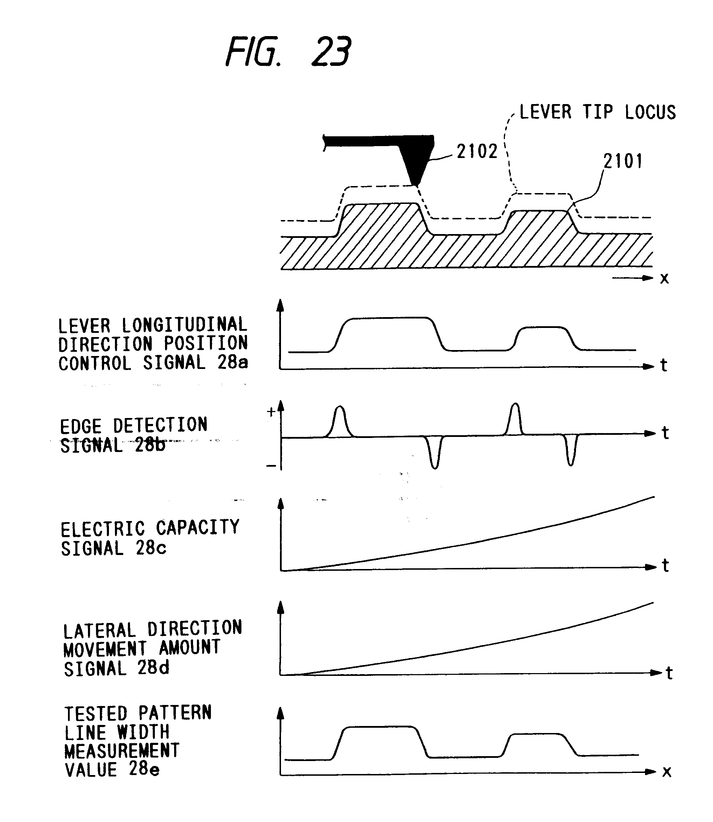

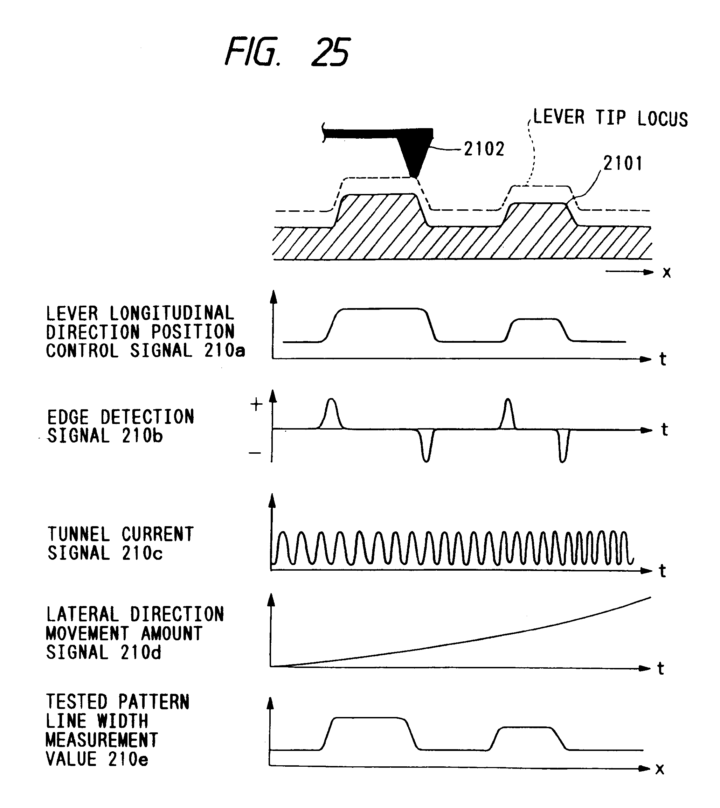

Fig. 22 is a block diagram of a line width measuring apparatus relating to an eleventh embodiment of the invention, and Fig. 23 is a waveform diagram showing signal examples in each part of the apparatus.

The apparatus is also different from the apparatus of Fig. 16 only in a construction of the relative drive amount detection means as shown in Fig. 22, the relative drive amount detection means comprising a plate 2701 fixed on the stage 2111, a plate 2703 positioned fixedly against the lever 2102, an AC power supply 2702 for applying an AC voltage between the plates 2701, 2703, and an electric capacity detection circuit 2704 for detecting an electric capacity between the plates 2701, 2703 and outputting an electric capacity signal 28c to the lateral direction movement detection circuit 2120.

In the above-described construction, an AC voltage is applied to the plate 2701 by the AC power supply 2702, and an electric capacity between the plates 2701 and 2703 is detected by the electric capacity detection circuit 2704, however, when the stage 2111 or the tested pattern 2101 and the lever 2102 move relatively in the lateral direction, the electric capacity between the plates 2701, 2703 changes. Accordingly, the lateral relative movement amount can be read at a precision of 1 nanometer by monitoring the electric capacity signal 28c, and hence a lateral direction movement amount signal 28d is obtained through the lateral direction movement detection circuit 2120 and then output to the shape calculation circuit 2113. In the shape calculation circuit 2113, a tested pattern line width measurement value 28e is calculated and output as in the case of the eighth embodiment according to the lateral direction movement amount signal 28d and a plurality of edge detection signals 28b obtained as in the case of the eighth embodiment.

### Embodiment 12

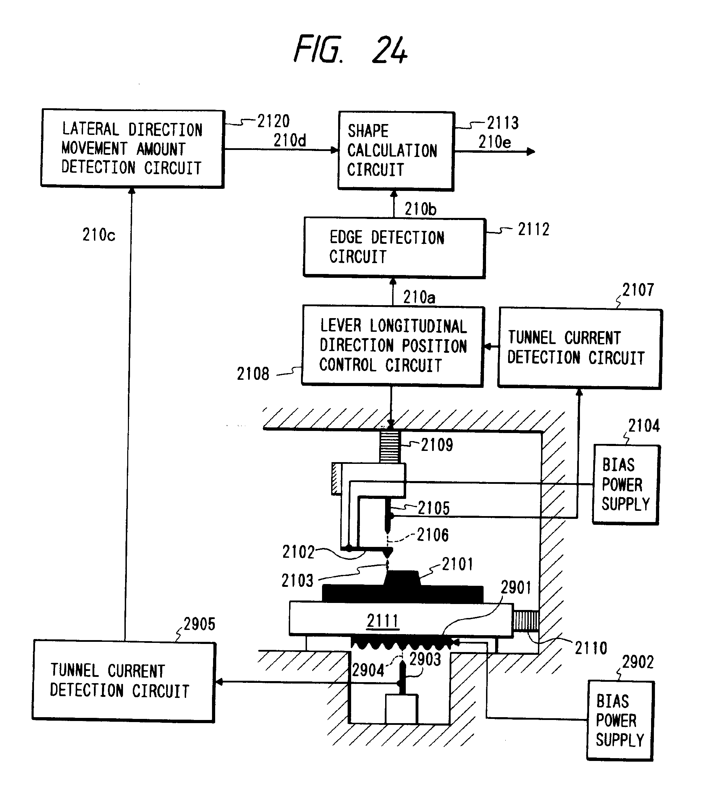

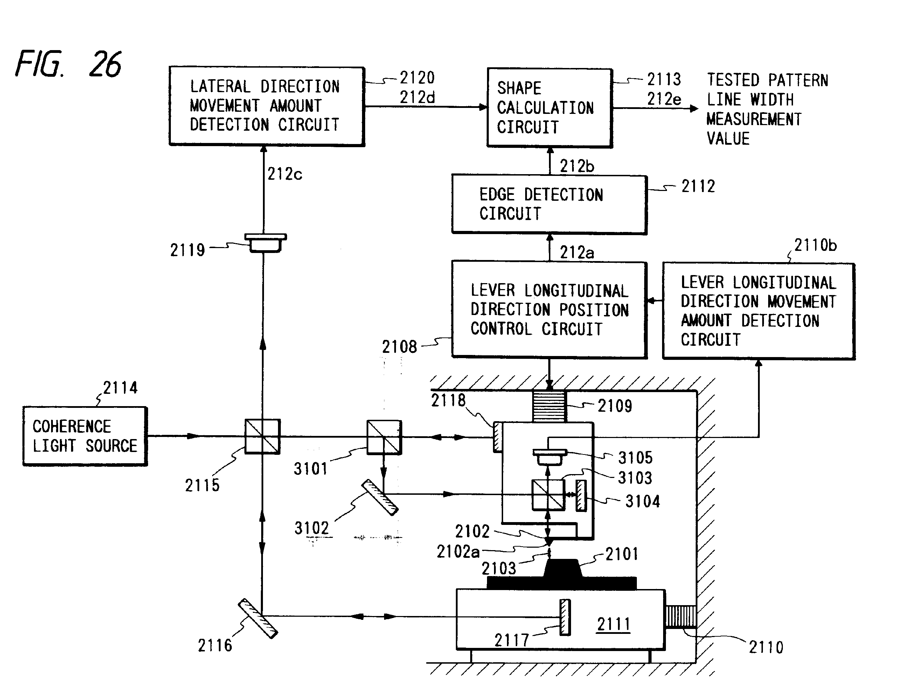

Fig. 24 is a block diagram of a line width measuring apparatus relating to a twelfth embodiment of the invention, and Fig. 25 is a waveform diagram showing signal examples in each part of the apparatus.

The apparatus is also different from the apparatus of Fig. 16 only in a construction of the relative drive amount detection means as shown in Fig. 24, the relative drive amount detection means comprising a conductive reference scale 2901 fixed on the stage 2111, a probe 2903 having the tip kept close to the reference scale 2901 at a distance of 1 nanometer or below and positioned fixedly against the lever 2102, a bias power supply 2902 for applying a bias voltage between the reference scale 2901 and the probe 2903, and a tunnel current detection circuit 2905 for detecting a tunnel current 2904 flowing between the reference scale 2901 and the probe 2903 and outputting a tunnel current signal 210c to the lateral direction movement detection circuit 2120.

In the above-described construction, a bias voltage is applied to the reference scale 2901, and the tunnel current 2904 flowing between the probe 2903 and the reference scale 2901 is detected by the tunnel current detection circuit 2905, however, when the stage 2111 or the tested pattern 2101 and the lever 2102 make a lateral relative movement, an interval between the reference scale 2901 and the probe 2903 changes at a pitch period of the reference scale 2901, and thus a change in intensity arises on the tunnel current 2904. For example, if an atomic array of a cleavage plane surface of conductive crystal such as graphite or the like is used as the reference scale 2901, and in interatomic distance is 0.2 nanometers, then the change in intensity corresponds to one period where the relative movement amount is 0.2 nanometers. Accordingly, the lateral relative movement amount can be read at a precision of 1 nanometer or below according to the tunnel current signal 210c from the tunnel current detection circuit 2905, therefore the lateral direction movement detection circuit 2120 counts the tunnel current signal 210c to obtain a lateral direction movement amount signal 210d and outputs it to the shape calculation circuit 2113.

In the shape calculation circuit 2113, a tested pattern line width measurement value 210e is calculated and output as in the case of the eighth embodiment according to the lateral direction movement amount signal 210d and a plurality of edge detection signals 210b obtained as in the case of the eighth embodiment.

### Embodiment 13

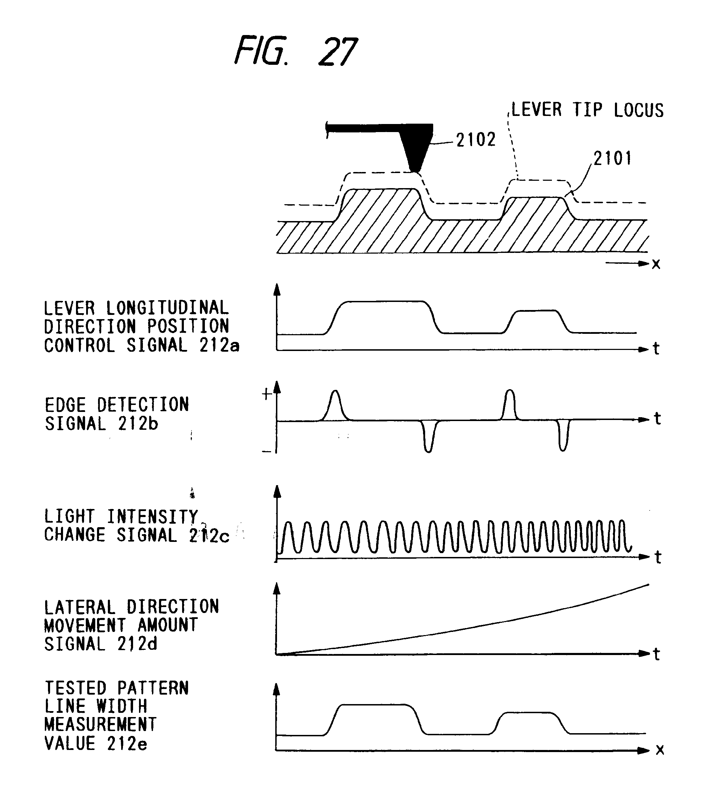

Fig. 26 is a block diagram of a line width measuring apparatus relating to a thirteenth embodiment of the invention, and Fig. 27 is a waveform diagram showing signal examples in each part of the apparatus.

The apparatus is different from that of Fig. 16 only in the construction of working force detection means for detecting the atomic force 2103 as a displacement of the free end of the lever 2102 as shown in Fig. 26, the working force detection means comprising, as illustrated therein, optical means wherein a coherent light output by the coherence light source 2114 is incident on a beam splitter 3103 by way of a beam splitter 3101 and a mirror 3102 and divided thus into two, the two lights are irradiated to reflection onto the free end of the lever 2102 and a mirror 3104 fixed on a fixed end of the lever 2102 each and then combined again by the beam splitter 3103, a photodiode 3105 for detecting an interference light obtained by the optical means, and a lever longitudinal direction movement detection circuit 3106 for detecting a displacement (longitudinal movement amount) of the free end of the lever 2102 according to a light intensity signal generated by the photodiode 3105 and outputting it to the lever longitudinal direction position control circuit 2108.

In the above-described construction, a flexure arises on the lever 2101, as described hereinbefore, according to the atomic force 2103 working between the insulating tested pattern 2101 and the lever 2102 kept opposite close thereto at a distance of 1 nanometer or below. Then, the coherent light from the coherence light source 2114 which is incident through the beam splitter 2115 is incident on the beam splitter 3103 by way of the beam splitter 3101 and the mirror 3102, and one of the lights divided into two is reflected by a back of the lever 2102, the other is reflected by the mirror 3104, the two lights are combined again by the beam splitter 3103, and the interference light is incident on the photodiode 3105. The interference light then produces a change in brightness according to a vertical move of the lever 2102 due to flexure, which is detected by the photodiode 3105, and thus a light intensity is detected in the lever longitudinal direction movement detection circuit 3106. Then, a longitudinal position of the lever 2102 is controlled by the lever longitudinal direction position control circuit 2108 and the lever longitudinal direction position control means 2109 so as to keep the detected light intensity, or the flexure of the lever 2102 or the atomic force 2103 constant. Accordingly, if the stage 2111 is moved laterally by the stage driving means 2110, and the tested pattern is scanned with a projection of the lever 2102, then the atomic force 2103 changes according to a tongued-and-grooved face of the pattern and the free end of the lever 2102 is displaced thereby, and since a lever longitudinal direction position control signal 212a generated by the lever longitudinal direction position control circuit 2108 then includes information on edge of the tested pattern 2101, the edge of the tested pattern 2101 is detected by the edge detection circuit 2112 as in the case of the eighth embodiment, and a plurality of edge detection signals 212b are output to the shape calculation circuit 2113.

In the shape calculation circuit 2113, a tested pattern line width measurement value 212e is calculated and output as in the case of the eighth embodiment according to the plural edge detection signal 212b and a lateral direction movement amount signal 212d obtained as in the case of the eighth embodiment.

Then, the case where Michelson interferometry using a single frequency laser as the coherence light source 2114 is applied is indicated herein, however, a photoheterodyne interferometry using a double-cycle orthogonal polarization laser such as Zeeman laser or the like may be applied otherwise. Further, while the case where a photowave interferometry is applied is indicated as a method for detecting an amount of relative movement of the tested pattern 2101 and the lever 2102, grid interferometry, TTL active auto focusing method, method for detecting a change of electric capacity, relative position detecting method using a tunnel current may also be applied as indicated in the embodiments ninth to twelfth.

### Embodiment 14

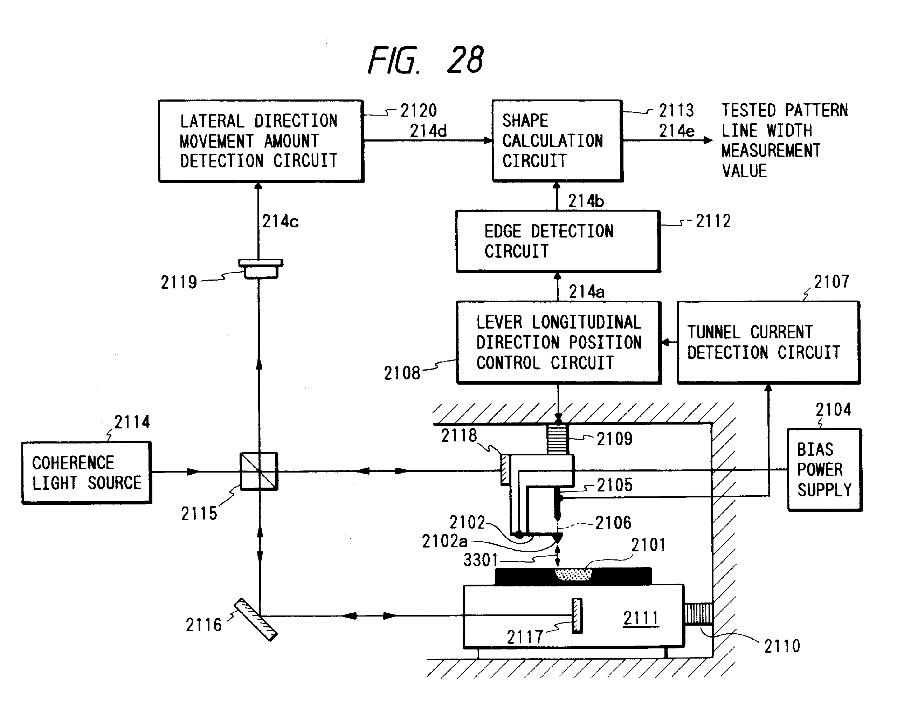

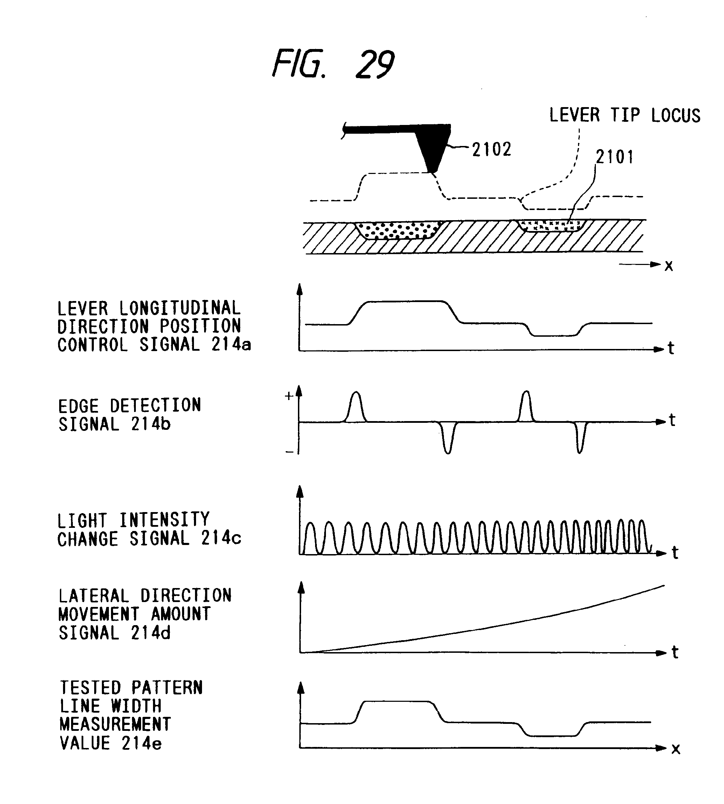

Fig. 28 is a block diagram of a line width measuring apparatus relating to a fourteenth embodiment of the invention, and Fig. 29 is a waveform diagram showing signal examples in each part of the apparatus.

As shown in Fig. 28, the apparatus comprises using a magnetic force 3301 as working on the lever 2102, the tested pattern 2101 and the lever 2102 having a magnetism, which is different from the construction of the eighth embodiment, and the projection 2102a of the lever 2102 is disposed opposite to the tested pattern 2101 closely at a distance of 1 nanometer or below. The construction and operation of other portions are similar to those of the eighth embodiment.

Accordingly, a displacement of the free end of the lever 2102 caused by the magnetic force 3301 changing where the stage 2111 is moved laterally and the tested pattern 2101 is scanned with the lever 2102 is detected and so controlled to be constant in this case. Then, a tested pattern line width measurement value 214e is calculated and output by the shape calculation circuit 2113 according to a plurality of edge detection signals 214b obtained as in the case of the eighth embodiment and a lateral direction movement amount signal 214d.

Meanwhile, Michelson interferometry using a single frequency laser as the coherence light source 2114 is employed in this embodiment, however, a photoheterodyne interferometry using a double-cycle orthogonal polarization laser such as zeeman laser or the like may be applied otherwise. Further, photowave interferometry is used as a method for detecting an amount of relative movement of the tested pattern 2101 and the lever 2102, however, grid interferometry, TTL active auto focusing method, method for detecting a change of electric capacity, or relative position detecting method using a tunnel current may also be applied as indicated in the embodiments ninth to twelfth. Then, a tunnel current is used as means for detecting a vertical flexure of the lever 2102, however, the photowave interferometry given in the embodiments eighth to twelfth may also be used.

As described above, according to the invention, a tunnel current flowing between the tested pattern having a conductive member and the probe, or an atomic force or magnetic force working between the insulating or magnetic tested pattern and lever will be detected on principles of STM, AFM and MFM, therefore edges can be detected at a transverse resolution of 0.1 nanometers, further interedge length is measured by using optical measuring method having a long-stroke and nanometer-order high resolution and high precision, method for detecting a change of electric capacity, or method for detecting an amount of relative movement with the reference scale using an electron tunneling, therefore a line width of hyperfine worked pattern or the like can be measured in a small and simple construction at a nanometer-order high resolution and high precision irrespective of an error of a relative drive system of the lever and the tested pattern.

## Claims

1. A measuring apparatus, comprising:
- a probe (102, 1103, 2105) positioned opposite to a tested surface (101, 1101, 2101) having a plurality of edge portions,
- edge detection means (205-212; 205, 509; 1106, 1110; 2108, 2112) for detecting said edge portions by monitoring one of either a working force (2103, 3301) or a tunnel current (1104, 2106) generated between said probe (102, 1103, 2105) and the tested surface, and
- movement means (209, 1108, 2110) for moving said probe (102, 1103, 2105) relative to and along the tested surface from one of the edge portions to the other,
characterized by comprising
- distance measurement means (1112-1118; 1301-1305, 1117, 1118, 1112; 1501-1507, 1118; 1701-1704, 1118; 1901-1905; 2114-2119; 2301-2305, 2119; 2501-2507; 2701-2704, 2120; 2901-2905, 2120) for measuring a relative moving distance of the probe (102, 1103, 2105) moved by said movement means (209; 1108, 2110) from a position where said edge detection means detects said one of the edge portions to a position where said edge detection means detects the other of the edge portions, wherein an interval between the edge portions is detected by the measured relative moving distance of the probe.

2. The apparatus as defined in claim 1,
further comprising probe position control means (501; 1107; 2109) for controlling the position of said probe (102, 1103, 2105) according to a control signal generated to keep constant one of either a working force (2103, 3301) or a tunnel current (1104, 2106) generated between said probe (102, 1103, 2105) and the tested surface.

3. The apparatus as defined in claim 2,
wherein said edge detection means detects edge portions from a differential signal (2b, 12b, 14b, ..., 214b) of said control signal.

4. The apparatus as defined in claim 1,
further comprising vibration means (207, 501) for vibrating said probe (102, 1103, 2105) at a predetermined frequency in a predetermined direction, wherein said edge detection means (1105, 1106, 1110) detects edge portions according to a change in amplitude of a predetermined frequency component of a monitoring signal of either a working force or a tunnel current (1104) generated between said probe (1103) and the tested surface (1101a) when the probe (1103) is vibrated by said vibration means (207, 501).

5. The apparatus as defined in claim 4,
further comprising probe position control means (1107) for controlling a position of said probe (1103) so as to keep constant a component other than said predetermined frequency component of said monitoring signal.

6. The apparatus as defined in claims 4 or 5,
wherein said vibration means (207) vibrates said probe in a direction perpendicular to the tested surface.

7. The apparatus as defined in claims 4 or 5,
wherein said vibration means vibrates said probe in a direction parallel (501) to the tested surface.

8. The apparatus as defined in anyone of claims 1 to 7,
wherein said edge detection means (2107, 2108, 2112) detects an atomic force (2103) generated between said probe (2105) and the tested surface as the working force.

9. The apparatus as defined in anyone of claims 1 to 7,
wherein said edge detection means (2107, 2108, 2112) detects a magnetic force (3301) generated between said probe (2105) and the tested surface as the working force.

10. The apparatus as defined in anyone of claims 1 to 7,
wherein said edge detection means comprises voltage application means (1102; 2104) for applying a voltage between said probe (1103, 2105) and the tested surface, and tunnel current detection means (1105, 2107) for detecting a tunnel current (1104, 2106) flowing between said probe (1103, 2105) and the tested surface by applying the voltage.

11. The apparatus as defined in anyone of claims 1 to 10,
wherein said distance measurement means comprises an interferometer (1112-1117; 2114-2119) generating signals at each of predetermined unit distances relative to light wavelength.

12. The apparatus as defined in anyone of claims 1 to 10,
wherein said distance measurement means comprises a grid interferometer (1301-1305; 1117) generating signals at each of predetermined distances according to a pitch of a diffraction grid (1302).

13. The apparatus as defined in anyone of claims 1 to 10,
wherein said distance measurement means comprises a mirror (1503) moving together with the tested surface (1101), means for causing a light flux to be incident on said mirror (1503) at non-perpendicular angle, and means (1506, 1507) for measuring the moving distance by shift of a receiving position at which a light reflected on said mirror (1503) is received, of the reflected light according to moving of the mirror (1503).

14. The apparatus as defined in anyone of claims 1 to 10,
wherein said distance measurement means comprises a first pole plate (1701) moving together with the tested surface (1101), a second pole plate (1703) fixed, and means (1704) for measuring the moving distance by change in electric capacity between the first pole (1701) and the second pole (1703) according to moving of the first pole plate (1701).

15. The apparatus as defined in anyone of claims 1 to 10,
wherein said distance measurement means comprises a reference scale (1901) moving together with the tested surface (1101a), a second probe (1903) provided opposite to said reference scale (1901), means (1902) for applying a voltage between the reference scale (1901) and the second probe (1903), means (1905) for detecting a tunnel current flowing between the reference scale (1901) and the second probe (1903) by applying the voltage, and means (1118) for measuring the moving distance by change in tunnel current according to the movement of the reference scale (1901).

16. The apparatus as defined in anyone of claims 1 to 15,
further comprising line width detection means (213; 1111, 2113) for detecting a line width of a pattern provided on the tested surface.

## Patentansprüche

1. Meßapparatur mit
- einer Sonde (102, 1103, 2105), die gegenüber einer Prüf-Fläche (101, 1101, 2101), welche mehrere Kantenteile besitzt, angeordnet ist,
- eine Kantennachweiseinrichtung (205-212; 205, 509; 1106, 1110; 2108, 2112) zum Nachweis der Kantenteile durch Überwachen entweder einer Arbeitskraft (2103, 3301) oder eines Tunnelstroms (1104, 2106), die beziehungsweise der zwischen der Sonde (102, 1103, 2105) und der Prüf-Fläche erzeugt wird und
- eine Bewegungseinrichtung (209, 1108, 2110) zum Bewegen der Sonde (102, 1103, 2105) relativ zu und längs der Prüf-Fläche von einem der Kantenteile zum anderen,
gekennzeichnet durch
- eine Distanzmeßeinrichtung (1112-1118; 1301-1305, 1117, 1118, 1112; 1501-1507, 1118; 1701-1704, 1118; 1901-1905; 2114-2119; 2301-2305, 2119; 2501-2507; 2701-2704, 2120; 2901-2905, 2120) zum Messen einer relativen Bewegungsdistanz der Sonde (102, 1103, 2105), wie diese von der Bewegungseinrichtung (209; 1108, 2110) von einer Position, in der die Kantennachweiseinrichtung den einen der Kantenteile nachweist, in eine Position, in der die Kantennachweiseinrichtung den anderen der Kantenteile nachweist, bewegt wird, wobei ein Intervall zwischen den Kantenteilen durch die gemessene relative Bewegungsdistanz der Sonde nachgewiesen wird.

2. Apparatur nach Anspruch 1,
des weiteren umfassend
- eine Sondenpositionssteuereinrichtung (501; 1107; 2109) zum Steuern der Position der Sonde (102, 1103, 2105) entsprechend einem erzeugten Steuersignal, um entweder eine Arbeitskraft (2103, 3301) oder einen Tunnelstrom (1104, 2106), die beziehungsweise der zwischen der Sonde (102, 1103, 2105) und der Prüffläche erzeugt wird, konstant zu halten.

3. Apparatur nach Anspruch 2, wobei
die Kantennachweiseinrichtung Kantenteile aus einem Differentialsignal (2b, 12b, 14b, ..., 214b) des Steuersignals nachweist.

4. Appartur nach Anspruch 1,
des weiteren umfassend
eine Schwingungseinrichtung (207, 501) zum Versetzen der Sonde (102, 1103, 2105) in Schwingungen bei einer vorbestimmten Frequenz in vorbestimmter Richtung, wobei die Kantennachweiseinrichtung (1105, 1106, 1110) Kantenteile entsprechend einer Änderung in der Amplitude einer Komponente vorbestimmter Frequenz eines Überwachungssignals entweder einer Arbeitskraft oder eines Tunnelstroms (1104) nachweist, die beziehungsweise der zwischen der Sonde (1103) und der Prüffläche (1101a) erzeugt wird, wenn die Sonde (1103) durch die Schwingungseinrichtung (207, 501) in Schwingungen versetzt wird.

5. Apparatur nach Anspruch 4,
des weiteren umfassend
eine Sondenpositionssteuereinrichtung (1107) zum Steuern einer Position der Sonde (1103), um eine andere Komponente des Überwachungssignals als die Komponente vorbestimmter Frequenz konstant zu halten.

6. Apparatur nach Anspruch 4 oder 5, bei der die Schwingungseinrichtung (207) die Sonde in einer Richtung senkrecht zur Prüffläche in Schwingungen versetzt.

7. Apparatur nach Anspruch 4 oder 5, bei der die Schwingungseinrichtung die Sonde in einer Richtung parallel (501) zur Prüffläche in Schwingungen versetzt.

8. Apparatur nach einem der Ansprüche 1 bis 7, bei der die Kantennachweiseinrichtung (2107, 2108, 2112) eine atomare Kraft (2103), die zwischen Sonde (2105) und Prüffläche als die Arbeitskraft erzeugt wird, nachweist.

9. Apparatur nach einem der Ansprüche 1 bis 7, bei der die Kantennachweiseinrichtung (2107, 2108, 2112) eine magnetische Kraft (3301), die zwischen Sonde (2105) und Prüffläche als die Arbeitskraft erzeugt wird, nachweist.

10. Apparatur nach einem der Ansprüche 1 bis 7, bei der die Kantennachweiseinrichtung eine Spannungszufuhreinrichtung (1102; 2104) zum Zuführen einer Spannung zwischen Sonde (1103, 2105) und Prüffläche aufweist und eine Tunnelstromnachweiseinrichtung (1105, 2107) zum Nachweis eines zwischen Sonde (1103, 2105) und Prüffläche durch die zugeführte Spannung fließenden Tunnelstroms (1104, 2106) aufweist.

11. Appartur nach einem der Ansprüche 1 bis 10, bei der die Distanzmeßeinrichtung ein Interferometer (1112-1117; 2114-2119) aufweist, das Signale bei einer jeden vorbestimmten Einheitsdistanz bezüglich der Lichtwellenlänge erzeugt.

12. Apparatur nach einem der Ansprüche 1 bis 10, bei der die Distanzmeßeinrichtung ein Gitter-Interferometer (1301-1305; 1117) aufweist, das Signale bei einer jeden vorbestimmten Distanz entsprechend einer Gitterkenngröße eines Beugungsgitters (1302) erzeugt.

13. Apparatur nach einem der Ansprüche 1 bis 10, bei der die Distanzmeßeinrichtung einen sich zusammen mit der Prüffläche (1101) bewegenden Spiegel (1503) aufweist, ferner eine Einrichtung zum Einfallenlassen eines Lichtflusses auf den Spiegel (1503) unter einem anderen als senkrechten Winkel sowie eine Einrichtung (1506, 1507) zum Messen der Bewegungsdistanz durch Verschieben einer Empfangsposition, bei der eine an dem Spiegel (1503) reflektierte Lichtkomponente des reflektierten Lichtes entsprechend der Bewegung des Spiegels (1503) emfangen wird.

14. Apparatur nach einem der Ansprüche 1 bis 10, bei der die Distanzmeßeinrichtung eine sich zusammen mit der Prüffläche (1101) bewegende erste Polplatte (1701) eine zweite, fixierte Polplatte (1703) sowie eine Einrichtung (1704) zum Messen der Bewegungsdistanz durch eine Änderung in der elektrischen Kapazität zwischen dem ersten Pol (1701) und dem zweiten Pol (1703) entsprechend der Bewegung der ersten Polplatte (1701) aufweist.

15. Apparatur nach einem der Ansprüche 1 bis 10, bei der die Abstandsmeßeinrichtung umfaßt
- eine sich zusammen mit der Prüffläche (1101a) bewegende Referenzskala (1901),
- eine gegenüber der Referenzskala (1901) vorgesehene zweite Sonde (1903),
- eine Einrichtung (1902) zum Zuführen einer Spannung zwischen Referenzskala (1901) und zweiter Sonde (1903),
- eine Einrichtung (1905) zum Nachweis eines durch die Spannungszufuhr zwischen Referenzskala (1901) und zweiter Sonde (1903) fließenden Tunnelstroms und
- eine Einrichtung (1118) zum Messen der Bewegungsdistanz durch Änderung im Tunnelstrom entsprechend der Bewegung der Referenzskala (1901).

16. Apparatur nach einem der Ansprüche 1 bis 15,
des weiteren umfassend
eine Linienbreiten-Nachweiseinrichtung (213; 1111, 2113) zum Nachweis einer Linienbreite eines auf der Prüffläche vorgesehenen Musters.

## Revendications

1. Un appareil de mesure comprenant :
- une sonde (102, 1103, 2105) positionnée face à une surface à tester (101, 1101, 2101) ayant un ensemble de parties de bord,
- des moyens de détection de bord (205-212; 205, 509; 1106, 1110; 2108, 2112) conçus pour détecter les parties de bord en contrôlant soit une force agissante (2103, 3301), soit un courant tunnel (1104, 2106) qui est généré entre la sonde (102, 1103, 2105) et la surface testée, et
- des moyens de déplacement (209, 1108, 2110) destinés à déplacer la sonde (102, 1103, 2105) par rapport à la surface testée, et le long de cette dernière, de l'une des parties de bord vers l'autre,
caractérisé en ce qu'il comprend
- des moyens de mesure de distance (1112-1118; 1301-1305, 1117, 1118, 1112; 1501-1507, 1118; 1701-1704, 1118; 1901-1905; 2114-2119; 2301-2305, 2119; 2501-2507; 2701-2704, 2120; 2901-2905, 2120) pour mesurer une distance de déplacement relatif de la sonde (102, 1103, 2105) qui est déplacée par les moyens de déplacement (209; 1108, 2110) à partir d'une position à laquelle les moyens de détection de bord détectent celle des parties de bord qui est mentionnée en premier, jusqu'à une position à laquelle les moyens de détection de bord détectent l'autre partie de bord, un intervalle entre les parties de bord étant détecté par la distance de déplacement relatif de la sonde qui est mesurée.

2. L'appareil défini dans la revendication 1,
comprenant en outre des moyens de commande de position de sonde (501; 1107; 2109) destinés à commander la position de la sonde (102, 1103, 2105) conformément à un signal de commande qui est généré de façon à maintenir constante soit une force agissante (2103, 3101), soit un courant tunnel (1104, 2106) qui est généré entre la sonde (102, 1103, 2105) et la surface testée.

3. L'appareil défini dans la revendication 2,
dans lequel les moyens de détection de bord détectent des parties de bord à partir d'un signal différentiel (2b, 12b, 14b, ..., 214b) du signal de commande.

4. L'appareil défini dans la revendication 1,
comprenant en outre des moyens de vibration (207, 501) qui sont destinés à faire vibrer la sonde (102, 1103, 2105) à une fréquence prédéterminée dans une direction prédéterminée, et dans lequel les moyens de détection de bord (1105, 1106, 1110) détectent des parties de bord conformément à un changement d'amplitude d'une composante de fréquence prédéterminée d'un signal de contrôle concernant soit une force agissante soit un courant tunnel (1104) qui est généré entre la sonde (1103) et la surface testée (1101a), lorsque la sonde (1103) est mise en vibration par les moyens de vibration (207, 501).

5. L'appareil défini dans la revendication 4,
comprenant en outre des moyens de commande de position de sonde (1107) qui sont destinés à commander la position de la sonde (1103) de façon à maintenir constante une composante autre que la composante de fréquence prédéterminée du signal de contrôle.

6. L'appareil défini dans les revendications 4 ou 5,
dans lequel les moyens de vibration (207) font vibrer la sonde dans une direction perpendiculaire à la surface testée.

7. L'appareil défini dans les revendications 4 ou 5,
dans lequel les moyens de vibration font vibrer la sonde dans une direction parallèle (501) à la surface testée.

8. L'appareil défini dans l'une quelconque des revendications 1 à 7, dans lequel les moyens de détection de bord (2107, 2108, 2112) détectent une force atomique (2103) qui est générée entre la sonde (2105) et la surface testée, sous la forme de la force agissante.

9. L'appareil défini dans l'une quelconque des revendications 1 à 7 , dans lequel les moyens de détection de bord (2107, 2108, 2112) détectent une force magnétique (3301) qui est générée entre la sonde (2105) et la surface testée, sous la forme de la force agissante.

10. L'appareil défini dans l'une quelconque des revendications 1 à 7, dans lequel les moyens de détection de bord comprennent des moyens d'application de tension (1102; 2104) qui sont destinés à appliquer une tension entre la sonde (1103, 2105) et la surface testée, et des moyens de détection de courant tunnel (1105, 2107) qui sont destinés à détecter un courant tunnel (1104, 2106) qui circule entre la sonde (1103, 2105) et la surface testée, sous l'effet de l'application de la tension.

11. L'appareil défini dans l'une quelconque des revendications 1 à 10, dans lequel les moyens de mesure de distance comprennent un interféromètre (1112-1117; 2114-2119) qui génère des signaux à chacune de distances unitaires prédéterminées rapportées à une longueur d'onde de lumière.

12. L'apareil défini dans l'une quelconque des revendications 1 à 10, dans lequel les moyens de mesure de distance comprennent un interféromètre à grille (1301-1305; 1117) qui génère des signaux à chacune de distances prédéterminées correspondant à un pas d'une grille de diffraction (1302).

13. L'appareil défini dans l'une quelconque des revendications 1 à 10, dans lequel les moyens de mesure de distance comprennent un miroir (1503) qui se déplace en compagnie de la surface testée (1101), des moyens destinés à projeter un flux lumineux sur le miroir (1503) sous une incidence non perpendiculaire, et des moyens (1506, 1507) qui sont destinés à mesurer la distance de déplacement par le décalage d'une position de réception de la lumière réfléchie, à laquelle la lumière réfléchie sur le miroir (1503) est reçue, conformément au déplacement du miroir (1503).

14. L'appareil défini dans l'une quelconque des revendications 1 à 10, dans lequel les moyens de mesure de distance comprennent une première plaque polaire (1701) qui se déplace avec la surface testée (1101), une seconde plaque polaire (1703) qui est fixe, et des moyens (1704) qui sont destinés à mesurer la distance de déplacement par le changement de capacité électrique entre le premier pôle (1701) et le second pôle (1703), conformément au déplacement de la première plaque polaire (1701).

15. L'appareil défini dans l'une quelconque des revendications 1 à 10, dans lequel les moyens de mesure de distance comprennent une échelle de référence (1901) qui se déplace avec la surface testée (1101a), une seconde sonde (1903) qui est placée face à l'échelle de référence (1901), des moyens (1902) qui sont destinés à appliquer une tension entre l'échelle de référence (1901) et la seconde sonde (1903), des moyens (1905) qui sont destinés à détecter un courant tunnel circulant entre l'échelle de référence (1901) et la seconde sonde (1903) sous l'effet de l'application de la tension, et des moyens (1118) qui sont destinés à mesurer la distance de déplacement par le changement du courant tunnel conformément au moment de l'échelle de référence (1901).

16. L'appareil défini dans l'une quelconque des revendications 1 à 15, comprenant en outre des moyens de détection de largeur de ligne (213; 1111, 2113) pour détecter une largeur de ligne d'un motif qui est formé sur la surface testée.
